# EUROPEAN PATENT APPLICATION

(11) **EP 4 783 705 A1**
(43) Date of publication of application: **29.07.2026**
(21) Application number: 24870352.2
(22) Date of filing: 03.09.2024
(51) Int. Cl.: H04W 72/40, H04W 4/70

(54) **COMMUNICATION METHOD, TERMINAL DEVICE, AND STORAGE MEDIUM**

(30) Priority: 28.09.2023 CN 202311294843
(71) Applicant: HUAWEI TECHNOLOGIES CO., LTD., Shenzhen, Guangdong 518129 (CN)
(72) Inventor: PAN, Xiaodan, Shenzhen, Guangdong 518129 (CN); YE, Kuan, Shenzhen, Guangdong 518129 (CN); WANG, Rui, Shenzhen, Guangdong 518129 (CN); PENG, Wenjie, Shenzhen, Guangdong 518129 (CN)
(74) Representative: Epping - Hermann - Fischer
(86) International application number: PCT/CN2024/116510
(87) International publication number: WO 2025/066806

(57) **Abstract**

Embodiments of this application provide a communication method, a terminal device, and a storage medium, to implement communication between terminal devices via a relay device. Embodiments of this application provide a communication method, including: receiving a first message from a network device, where the first message indicates a relay support capability of the network device; and determining first configuration information of a first terminal device based on the first message, where the first configuration information is used by the first terminal device to communicate with a second terminal device via a relay device. This resolves an existing problem that a network device and a terminal device cannot support communication between terminal devices, and can implement the communication between the terminal devices via a relay device.

## Description

This application claims priority to Chinese Patent Application No. 202311294843.2, filed with the China National Intellectual Property Administration on September 28, 2023 and entitled "COMMUNICATION METHOD, TERMINAL DEVICE, AND STORAGE MEDIUM", which is incorporated herein by reference in its entirety.

### TECHNICAL FIELD

This application relates to the field of communication technologies, and in particular, to a communication method, a terminal device, and a storage medium.

### BACKGROUND

In a wireless communication system, data communication may be performed between user equipments (user equipments, UEs) through a network, or communication may be directly performed between UEs without using a network device. A link between the UEs is referred to as a sidelink (Sidelink). When communication is directly performed between UEs over a sidelink (Sidelink), a communication distance is not very long due to a reason such as an insufficient hardware capability of a transmitter UE. Consequently, a scenario in which the transmitter UE communicates with a receiver UE over the sidelink is limited.

Because there is a unicast communication requirement between the transmitter UE and the receiver UE, to expand a sidelink communication range, data and signaling are transferred between the transmitter UE and the receiver UE via a relay device. However, currently, there is no corresponding solution to how configuration is performed for the transmitter UE and the relay device, and especially, how configurations for the transmitter UE and the relay device are provided, through interaction with a base station, by the base station based on a relay communication capability of the base station.

### SUMMARY

Embodiments of this application provide a communication method, a terminal device, and a storage medium, to implement communication between terminal devices via a relay device.

To resolve the foregoing technical problem, embodiments of this application provide the following technical solutions.

According to a first aspect, an embodiment of this application provides a communication method, including:
receiving a first message from a network device, where the first message indicates a relay support capability of the network device; and
determining first configuration information of a first terminal device based on the first message, where the first configuration information is used by the first terminal device to communicate with a second terminal device via a relay device.

In the foregoing solution, the first terminal device receives the first message, and obtains the relay support capability of the network device by parsing the first message. When determining that a network supports a relay, the first terminal device obtains the first configuration information, and the first terminal device may configure a bearer needed for the communication between the first terminal device and the second terminal device via the relay device, so that the first terminal device communicates with the second terminal device via the relay device. This resolves a current problem that a network device and a terminal device cannot support communication between terminal devices, and can implement the communication between the terminal devices via a relay device.

In a possible implementation of the first aspect, the first message includes first indication information, where the first indication information indicates that the network device supports the first terminal device in communicating with the second terminal device via the relay device. In the foregoing solution, the network device may notify the first terminal device in an explicit indication manner. To be specific, the first message generated by the network device includes the first indication information. After obtaining the first indication information from the first message, the first terminal device determines, based on the first indication information, that the network device supports the first terminal device in communicating with the second terminal device via the relay device.

In a possible implementation of the first aspect, the method further includes:
determining first quality of service QoS flow information between the first terminal device and the relay device; and
sending a second message to the network device, where the second message includes the first QoS flow information, the first QoS flow information includes an identity of one or more first QoS flows and a first QoS parameter requirement of the one or more first QoS flows, and the first QoS parameter requirement is a QoS parameter requirement of the first QoS flow between the first terminal device and the relay device, where
the first QoS flow includes a QoS flow between the first terminal device and the second terminal device.

In the foregoing solution, the first terminal device can generate the first QoS flow information, and send the first QoS flow information to the network device via the second message. The network device obtains the identity of the one or more first QoS flows and the first QoS parameter requirement of the one or more first QoS flows based on the first QoS flow information, and the network device may generate the first configuration information for the first terminal device based on the identity of the one or more first QoS flows and the first QoS parameter requirement of the one or more first QoS flows, to resolve a problem that the first terminal device cannot configure a bearer between the first terminal device and the relay device.

In a possible implementation of the first aspect, the second message further includes an identity of the relay device and/or an identity of the second terminal device.

In the foregoing solution, the second message carries the identity of the relay device and/or the identity of the second terminal device, so that the network device determines the relay device and the second terminal device that perform device-to-device communication with the first terminal device.

In a possible implementation of the first aspect, the method further includes:
sending a third message to the network device, where the third message includes third QoS flow information, the third QoS flow information includes an identity of one or more first QoS flows and a fourth QoS parameter requirement of the one or more first QoS flows, and the fourth QoS parameter requirement is a QoS parameter requirement of the first QoS flow between the first terminal device and the second terminal device, where
the first QoS flow includes a QoS flow between the first terminal device and the second terminal device.

In the foregoing solution, the third message sent by the first terminal device to the network device includes second information of the first QoS, so that the network device can obtain the identity of the one or more first QoS flows and the fourth QoS parameter requirement of the one or more first QoS flows by receiving the third message, and the network device may generate the first configuration information for the first terminal device based on the identity of the one or more first QoS flows and the fourth QoS parameter requirement of the one or more first QoS flows, to resolve a problem that the first terminal device cannot configure a bearer between the first terminal device and the relay device.

In a possible implementation of the first aspect, the third message further includes an identity of the relay device and/or an identity of the second terminal device.

In the foregoing solution, the third message carries the identity of the relay device and/or the identity of the second terminal device, so that the network device determines the relay device and the second terminal device that perform device-to-device communication with the first terminal device.

In a possible implementation of the first aspect, the second message and the third message may be a same message or different messages. For example, the third message may be independent of the second message, or the second message and the third message are simultaneously sent.

In a possible implementation of the first aspect, the determining the first configuration information of the first terminal device based on the first message includes:
determining, based on the first message, that the network device supports the first terminal device in communicating with the second terminal device via the relay device;
receiving the first configuration information from the network device; and
determining a configuration of a first bearer between the first terminal device and the relay device based on the first configuration information.

In the foregoing solution, the first terminal device obtains the first configuration information, and the first terminal device may then determine the configuration of the first bearer based on a configuration parameter included in the first configuration information. The first bearer includes a bearer between the first terminal device and the relay device. In this embodiment of this application, the first terminal device may configure the first bearer based on the indication of the network device, so that the first terminal device can communicate with the second terminal device via the relay device.

In a possible implementation of the first aspect, the first configuration information includes the configuration of the first bearer and a mapping relationship between a second bearer and the first bearer, where
the first bearer includes a bearer between the first terminal device and the relay device; and
the second bearer includes a bearer between the first terminal device and the second terminal device.

In the foregoing solution, the first configuration information sent by the network device to the first terminal device includes the configuration of the first bearer and the mapping relationship between the second bearer and the first bearer, so that the first terminal device can obtain the mapping relationship between the second bearer and the first bearer based on the first configuration information, and the first terminal device may configure the first bearer based on the indication of the network device, and determine that the first bearer is associated with the second bearer. In this way, the first terminal device can communicate with the second terminal device via the relay device.

In a possible implementation of the first aspect, the first configuration information further includes the configuration of the first bearer and a correspondence between the first QoS flow and the first bearer, where
the first QoS flow includes a QoS flow between the first terminal device and the second terminal device.

In the foregoing solution, the network device may notify the first terminal device of the correspondence between the first QoS flow and the first bearer, so that the first terminal device determines the correspondence between the first QoS flow and the first bearer via the first configuration information, and the first terminal device determines a correspondence between the first bearer and a second bearer with reference to other obtained configuration information.

In a possible implementation of the first aspect, the method further includes:
receiving second configuration information from the network device, where the second configuration information includes a configuration of a second bearer and a correspondence between the first QoS flow and the second bearer, where the second bearer includes a bearer between the first terminal device and the second terminal device; and
determining a correspondence between the first bearer and the second bearer based on the first configuration information and the second configuration information.

In the foregoing solution, the first terminal device may determine the correspondence between the first QoS flow and the second bearer by parsing the second configuration information. With reference to parsing of first configuration information by the first terminal device, it can be learned that the first terminal device determines the correspondence between the first QoS flow and the first bearer via the first configuration information, and the first terminal device determines a correspondence between the first bearer and the second bearer based on the correspondence between the first QoS flow and each of the first bearer and the second bearer. In this embodiment of this application, the first terminal device may autonomously determine the correspondence between the first bearer and the second bearer by processing the first configuration information and the second configuration information, and does not need to be notified by a network device side, so that the first terminal device can communicate with the second terminal device via the relay device.

In a possible implementation of the first aspect, the method further includes:
determining an identity of a second QoS flow between the first terminal device and the relay device and a second QoS parameter requirement corresponding to the second QoS flow, where the second QoS flow corresponds to one or more first QoS flows, and the first QoS flow includes a QoS flow between the first terminal device and the second terminal device; and
sending second QoS flow information to the network device, where the second QoS flow information includes the identity of the second QoS flow and the second QoS parameter requirement corresponding to the second QoS flow.

In the foregoing solution, the first terminal device may send the second QoS flow information to the network device by using the first bearer as a whole. For example, the first terminal device determines a second QoS flow, where the second QoS flow corresponds to one or more first QoS flows, and the one or more first QoS flows correspond to a second bearer between the first terminal device and the second terminal device. That is, the first terminal device enables a first QoS flow corresponding to a second bearer as a whole to correspond to a second QoS flow. The first terminal device may further determine a second QoS parameter requirement corresponding to the second QoS flow. In another possible implementation, the second QoS flow corresponds to one or more first QoS flows, and the one or more first QoS flows correspond to a plurality of second bearers between the first terminal device and the second terminal device. That is, the first terminal device enables a first QoS flow corresponding to a plurality of second bearers as a whole to correspond to a second QoS flow. The first terminal device may further determine a second QoS parameter requirement corresponding to the second QoS flow. After determining the second QoS flow information, the first terminal device sends the second QoS flow information to the network device. After the network device receives the second QoS flow information, the network device may determine the identity of the second QoS flow and the second QoS parameter requirement corresponding to the second QoS flow, and the first terminal device may configure the first bearer based on the indication of the network device, and determine that the first bearer is associated with the second bearer, so that the first terminal device can communicate with the second terminal device via the relay device.

In a possible implementation of the first aspect, the determining the second QoS parameter requirement corresponding to the second QoS flow includes:
determining, based on a first QoS parameter requirement of the one or more first QoS flows, the second QoS parameter requirement corresponding to the second QoS flow, where
the first QoS parameter requirement is a QoS parameter requirement of the first QoS flow between the first terminal device and the relay device; and
the second QoS parameter requirement is a QoS parameter requirement of the second QoS flow between the first terminal device and the relay device.

In the foregoing solution, the first terminal device may determine the second QoS parameter requirement corresponding to the second QoS flow, for example, determine, based on the first QoS parameter requirement of the one or more first QoS flows corresponding to the second QoS flow, the second QoS parameter requirement corresponding to the second QoS flow, and select the first QoS parameter requirement to generate the second QoS parameter requirement. The first terminal device may generate the second QoS parameter requirement, so that the network device can allocate a configuration of a sidelink bearer to the first terminal device based on the second QoS parameter requirement, and the first terminal device configures the first bearer based on the configuration of the sidelink bearer.

In a possible implementation of the first aspect, the second QoS flow corresponds to one or more second bearers, and the second bearer includes a bearer between the first terminal device and the second terminal device.

In the foregoing solution, one or more second bearers are configured between the first terminal device and the second terminal device. The first terminal device determines that the second QoS flow corresponds to the one or more second bearers between the first terminal device and the second terminal device, and based on the correspondence between the second QoS flow and the one or more second bearers, the network device can configure a sidelink bearer for the first terminal device based on the second QoS flow.

In a possible implementation of the first aspect, the first configuration information further includes a configuration of a first bearer and a correspondence between the second QoS flow and the first bearer, and the first bearer includes a bearer between the first terminal device and the relay device.

In the foregoing solution, the network device supports the first terminal device in communicating with the second terminal device via the relay device, and the first configuration information sent by the network device includes the configuration of the first bearer and the correspondence between the second QoS flow and the first bearer, so that the first terminal device determines the correspondence between the first QoS flow and the first bearer via the first configuration information, and the first terminal device determines a correspondence between the first bearer and a second bearer with reference to other obtained configuration information.

In a possible implementation of the first aspect, the method further includes:
receiving second configuration information from the network device, where the second configuration information includes a configuration of the second bearer and a correspondence between the first QoS flow and the second bearer, where the second bearer includes a bearer between the first terminal device and the second terminal device; and
determining a correspondence between the first bearer and the second bearer based on the first configuration information and the second configuration information.

In the foregoing solution, the first terminal device may determine the correspondence between the first QoS flow and the second bearer by parsing the second configuration information. With reference to parsing of first configuration information by the first terminal device, it can be learned that the first terminal device determines the correspondence between the first QoS flow and the first bearer via the first configuration information, and the first terminal device determines a correspondence between the first bearer and the second bearer based on the correspondence between the first QoS flow and each of the first bearer and the second bearer. In this embodiment of this application, the first terminal device may autonomously determine the correspondence between the first bearer and the second bearer by processing the first configuration information and the second configuration information, and does not need to be notified by a network device side, so that the first terminal device can communicate with the second terminal device via the relay device.

In a possible implementation of the first aspect, the method further includes:
sending a first request to the network device, where the first request is used to request the network device to allocate a relay transmission resource.

In the foregoing solution, after the first terminal device determines the configuration of the first bearer and the correspondence between the first bearer and the second bearer, when the first terminal device needs to communicate with the second terminal device via the relay device, the first terminal device further needs to obtain a relay transmission resource. In this embodiment of this application, the first terminal device may generate a first request, and send the first request to the network device, so that the network device receives the first request, and the network device may allocate the relay transmission resource to the first terminal device based on the first request.

In a possible implementation of the first aspect, the determining the first configuration information of the first terminal device based on the first message includes:
determining, based on the first message, that the network device supports the first terminal device in communicating with the second terminal device via the relay device;
obtaining third configuration information from the first message, where the third configuration information is used for communication between terminal devices; and
determining the first configuration information based on the third configuration information.

In the foregoing solution, when the first terminal device is in an idle state, the first terminal device obtains the third configuration information, and the first terminal device may then determine a configuration of a first bearer based on the configuration parameter included in the third configuration information. The first bearer includes a bearer between the first terminal device and the relay device. For example, the first bearer may be a PC5 RLC bearer. In this embodiment of this application, the first terminal device may configure the first bearer based on the indication of the network device, so that the first terminal device can communicate with the second terminal device via the relay device.

In a possible implementation of the first aspect, the determining the first configuration information based on the third configuration information includes:
determining second configuration information from the third configuration information based on a third QoS parameter requirement of a first QoS flow, where the third QoS parameter requirement is an end-to-end QoS parameter requirement of the first QoS flow, the second configuration information includes a mapping relationship between the first QoS flow and a second bearer, the second bearer includes a bearer between the first terminal device and the second terminal device, and the first QoS flow includes a QoS flow between the first terminal device and the second terminal device.

In the foregoing solution, the first QoS flow includes a QoS flow between the first terminal device and the second terminal device. The first terminal device determines that the third QoS parameter requirement is an end-to-end QoS parameter requirement of the first QoS flow. The third configuration information sent by the network device may include a plurality of sidelink bearer configurations, and the first terminal device selects a sidelink bearer configuration from the third configuration information as second configuration information based on the third QoS parameter requirement corresponding to the first QoS flow. The second configuration information includes a mapping relationship between the first QoS flow and a second bearer. The first terminal device may determine the first configuration information via the second configuration information, and then configure the first bearer based on the first configuration information, so that the first terminal device can communicate with the second terminal device via the relay device.

In a possible implementation of the first aspect, the determining the first configuration information based on the third configuration information further includes:
determining the first configuration information based on the third configuration information and the mapping relationship between the first QoS flow and the second bearer, where the first configuration information includes a configuration of a first bearer between the first terminal device and the relay device and/or a mapping relationship between the first bearer and the second bearer.

In the foregoing solution, the first terminal device determines the first configuration information based on a plurality of sidelink bearer configurations included in the third configuration information sent by the network device and the mapping relationship between the first QoS flow and the second bearer. The first configuration information includes a configuration of a first bearer corresponding to the first QoS flow, and the first terminal device may determine the configuration of the first bearer based on the configuration parameter included in the first configuration information. The first bearer includes a bearer between the first terminal device and the relay device. In this embodiment of this application, the first terminal device may configure the first bearer based on the indication of the network device, so that the first terminal device can communicate with the second terminal device via the relay device.

In a possible implementation of the first aspect, the method further includes:
when the first message includes the first indication information, and the first message does not include third configuration information and/or a relay transmission resource, determining that the network device does not support the first terminal device in communicating with the second terminal device via the relay device, where the third configuration information is used for communication between terminal devices;
   or
when the first message includes the first indication information, and the first message does not include third configuration information and/or a relay transmission resource, sending a second request to the network device, where the second request is used to request the network device to send the third configuration information and/or the relay transmission resource.

In the foregoing solution, in addition to determining the first indication information in the first message, the first terminal device further needs to determine whether the first message includes third configuration information and/or a relay transmission resource. For example, when the first message does not include the third configuration information, the first terminal device determines that the network device does not support the first terminal device in communicating with the second terminal device via the relay device. For example, when the first message does not include the relay transmission resource, the first terminal device determines that the network device does not support the first terminal device in communicating with the second terminal device via the relay device. For example, when the first message does not include the third configuration information and the relay transmission resource, the first terminal device determines that the network device does not support the first terminal device in communicating with the second terminal device via the relay device. The first terminal device can determine, based on the message content carried in the first message, whether the network device supports the first terminal device in communicating with the second terminal device via the relay device, so that the first terminal device can communicate with the second terminal device via the relay device with the support of the network device.

In a possible implementation of the first aspect, the first message includes second indication information, where the second indication information indicates that the network device does not support the first terminal device in communicating with the second terminal device via the relay device.

In the foregoing solution, when the network device does not support the first terminal device in communicating with the second terminal device via the relay device, the network device may generate second indication information. When obtaining the second indication information from the first message, the first terminal device may determine that the network device does not support the first terminal device in communicating with the second terminal device via the relay device. Therefore, the first terminal device no longer configures a sidelink bearer.

In a possible implementation of the first aspect, the first message does not include first indication information, which indicates that the network device does not support the first terminal device in communicating with the second terminal device via the relay device, where
the first indication information indicates that the network device supports the first terminal device in communicating with the second terminal device via the relay device.

In the foregoing solution, the network device may alternatively use an implicit indication manner. When supporting the first terminal device in communicating with the second terminal device via the relay device, the network device may generate first indication information, and include the first indication information in the first message. When the network device does not support the first terminal device in communicating with the second terminal device via the relay device, the network device may not generate first indication information, and the first terminal device may determine, based on a case in which the first message does not include the first indication information, that the network device does not support the first terminal device in communicating with the second terminal device via the relay device. Therefore, the first terminal device no longer configures a sidelink bearer.

In a possible implementation of the first aspect, the method further includes:
when the first message includes the first indication information, determining that the network device supports the first terminal device in communicating with the second terminal device via the relay device, where
the first indication information further indicates one or more thresholds.

In the foregoing solution, the network device may determine that the first indication information is used for the one or more thresholds, so that the first message may indicate the one or more thresholds. When obtaining the one or more thresholds from the first message, the first terminal device determines that the network device supports the first terminal device in communicating with the second terminal device via the relay device. The network device may implicitly indicate, depending on whether the threshold is carried, whether the network device supports the first terminal device in communicating with the second terminal device via the relay device.

In a possible implementation of the first aspect, the one or more thresholds include a first threshold, and the method further includes:
when signal quality of a link between the first terminal device and the second terminal device is less than or equal to the first threshold, triggering selection of a relay device, triggering reselection of a relay device, or executing a discovery procedure.

In the foregoing solution, the first terminal device obtains the first threshold from the network device, and when the signal quality of the link between the first terminal device and the second terminal device is less than or equal to the first threshold, the selection of the relay device is triggered, the reselection of the relay device is triggered, or the discovery procedure is executed, so that the first terminal device can communicate with the second terminal device via the relay device with the support of the network device.

In a possible implementation of the first aspect, the one or more thresholds include a first threshold and a second threshold, and the method further includes:
when signal quality of a link between the first terminal device and the second terminal device is less than or equal to the first threshold, triggering selection of a relay device or executing a discovery procedure;
   or
when signal quality of a link between the first terminal device and the relay device is less than or equal to the second threshold, triggering reselection of a relay device or executing a discovery procedure.

In the foregoing solution, the first terminal device obtains the first threshold and the second threshold from the network device, and separately determines each of the signal quality of the link between the first terminal device and the second terminal device and the signal quality of the link between the first terminal device and the relay device and the foregoing threshold, to trigger the selection of the relay device, trigger the reselection of the relay device, or execute the discovery procedure, so that the first terminal device can communicate with the second terminal device via the relay device with the support of the network device.

According to a second aspect, an embodiment of this application further provides a communication method, including:
sending a first message to a first terminal device, where the first message indicates a relay support capability of a network device.

In the foregoing solution, the network device may determine the first message, and notify the first terminal device of the first message, so that the network device notifies the first terminal device of the relay support capability of the network device. When determining that a network supports a relay, the first terminal device obtains first configuration information, and the first terminal device may configure a bearer needed for communication between the first terminal device and a second terminal device via a relay device, so that the first terminal device communicates with the second terminal device via the relay device. This resolves a current problem that a network device and a terminal device cannot support communication between terminal devices, and can implement the communication between the terminal devices via a relay device.

In a possible implementation of the second aspect, the first message includes first indication information, where the first indication information indicates that the network device supports the first terminal device in communicating with a second terminal device via a relay device.

In the foregoing solution, the network device may notify the first terminal device in an explicit indication manner. To be specific, the first message generated by the network device includes the first indication information. After obtaining the first indication information from the first message, the first terminal device determines, based on the first indication information, that the network device supports the first terminal device in communicating with the second terminal device via the relay device.

In a possible implementation of the second aspect, the method further includes:
receiving a second message from the first terminal device, where the second message includes first quality of service QoS flow information, the first QoS flow information includes an identity of one or more first QoS flows and a first QoS parameter requirement of the one or more first QoS flows, and the first QoS parameter requirement is a QoS parameter requirement of the first QoS flow between the first terminal device and the relay device, where
the first QoS flow includes a QoS flow between the first terminal device and the second terminal device.

In a possible implementation of the second aspect, the second message further includes an identity of the relay device and/or an identity of the second terminal device.

In a possible implementation of the second aspect, the method further includes:
receiving a third message from the first terminal device, where the third message includes third QoS flow information, the third QoS flow information includes an identity of one or more first QoS flows and a fourth QoS parameter requirement of the one or more first QoS flows, and the fourth QoS parameter requirement is a QoS parameter requirement of the first QoS flow between the first terminal device and the second terminal device, where
the first QoS flow includes a QoS flow between the first terminal device and the second terminal device.

In a possible implementation of the second aspect, the method further includes:
determining first configuration information based on the second message and the third message; and
sending the first configuration information.

In a possible implementation of the second aspect, the first configuration information includes a configuration of a first bearer and a mapping relationship between a second bearer and the first bearer, where
the first bearer includes a bearer between the first terminal device and the relay device; and
the second bearer includes a bearer between the first terminal device and the second terminal device.

In a possible implementation of the second aspect, the first configuration information includes a configuration of a first bearer and a correspondence between the first QoS flow and the first bearer, and the first bearer includes a bearer between the first terminal device and the relay device; and
the first QoS flow includes a QoS flow between the first terminal device and the second terminal device.

In a possible implementation of the second aspect, the method further includes:
sending second configuration information to the first terminal device, where the second configuration information includes a configuration of a second bearer and a correspondence between the first QoS flow and the second bearer, where the second bearer includes a bearer between the first terminal device and the second terminal device; and the first QoS flow includes a QoS flow between the first terminal device and the second terminal device.

In a possible implementation of the second aspect, the method further includes:
receiving a first request from the first terminal device, where the first request is used to request the network device to allocate a relay transmission resource; and
configuring the relay transmission resource for the first terminal device based on the first request.

In a possible implementation of the second aspect, the first message includes the first indication information, the first message does not include third configuration information and/or a relay transmission resource, and the third configuration information is used for communication between terminal devices; and
the first message indicates that the network device supports the first terminal device in communicating with the second terminal device via the relay device.

In a possible implementation of the second aspect, the method further includes:
receiving a second request from the first terminal device, where the second request is used to request the network device to send the third configuration information and/or the relay transmission resource; and
sending the third configuration information to the first terminal device based on the second request, and/or configuring the relay transmission resource for the first terminal device based on the second request.

In a possible implementation of the second aspect, the method further includes:
determining that the network device supports the first terminal device in communicating with the second terminal device via the relay device.

The first message includes first indication information, and the first indication information further indicates one or more thresholds.

In a possible implementation of the second aspect, the one or more thresholds include a first threshold.

When signal quality of a link between the first terminal device and the second terminal device is less than the first threshold, the first threshold is used by the first terminal device to trigger selection of a relay device, or used by the first terminal device to trigger reselection of a relay device, or used by the first terminal device to trigger execution of a discovery procedure.

In a possible implementation of the second aspect, the one or more thresholds include a first threshold and a second threshold.

When signal quality of a link between the first terminal device and the second terminal device is less than the first threshold, the first threshold is used by the first terminal device to trigger selection of a relay device, or used by the first terminal device to trigger execution of a discovery procedure;
or
when signal quality of a link between the first terminal device and the relay device is less than the second threshold, the second threshold is used by the first terminal device to trigger reselection of a relay device, or used by the first terminal device to trigger execution of a discovery procedure.

There is an interaction relationship between the communication method performed on the foregoing network device side and the communication method performed on the foregoing terminal device side. For specific implemented technical effects, refer to the descriptions of the effects of the possible implementations in the first aspect.

According to a third aspect, an embodiment of this application provides a communication method. The method includes:
receiving a first message from a network device, where the first message indicates a relay support capability of the network device; and
determining first configuration information of a relay device based on the first message, where the first configuration information is used by a first terminal device to communicate with a second terminal device via the relay device.

In the foregoing solution, when determining that a network supports a relay, the relay device obtains the first configuration information, and the relay device may configure a bearer needed for the communication between the first terminal device and the second terminal device via the relay device, so that the first terminal device communicates with the second terminal device via the relay device. This resolves a current problem that a network device and a terminal device cannot support communication between terminal devices, and can implement the communication between the terminal devices via a relay device.

In a possible implementation of the third aspect, the first message includes first indication information, where the first indication information indicates that the network device supports the first terminal device in communicating with a second terminal device via a relay device.

In the foregoing solution, the network device may notify the relay device in an explicit indication manner. To be specific, the first message generated by the network device includes the first indication information. After obtaining the first indication information from the first message, the relay device determines, based on the first indication information, that the network device supports the first terminal device in communicating with the second terminal device via the relay device.

In a possible implementation of the third aspect, the method further includes:
determining first quality of service QoS flow information between the relay device and the second terminal device; and
sending a second message to the network device, where the second message includes the first QoS flow information, the first QoS flow information includes an identity of one or more first QoS flows and a first QoS parameter requirement of the one or more first QoS flows, and the first QoS parameter requirement is a QoS parameter requirement between the relay device and the second terminal device, where
the first QoS flow includes a QoS flow between the first terminal device and the second terminal device.

In the foregoing solution, the relay device determines the first QoS parameter requirement between the relay device and the second terminal device based on the one or more first QoS flows. The relay device generates a second message, where the second message includes first QoS flow information. The relay device sends the second message to the network device. The network device may receive the second message, and determine the first QoS flow information by parsing the second message, the network device obtains an identity of one or more first QoS flows and a first QoS parameter requirement of the one or more first QoS flows based on the first QoS flow information, and the network device may configure a sidelink bearer for the relay device based on the identity of the one or more first QoS flows and the first QoS parameter requirement of the one or more first QoS flows to generate first configuration information for the relay device. This resolves a problem that the relay device cannot configure a bearer between the relay device and the second terminal device.

In a possible implementation of the third aspect, the method further includes:
sending a first mapping relationship to the network device, where the first mapping relationship indicates a first correspondence, and the first correspondence indicates that one or more first QoS flows are configured on a first bearer, or indicates a correspondence between the first QoS flow and a second bearer, where
the first QoS flow includes a QoS flow between the first terminal device and the second terminal device;
the first bearer includes a bearer between the relay device and the second terminal device; and
the second bearer includes a bearer between the first terminal device and the second terminal device.

In the foregoing solution, the relay device determines that one or more first QoS flows correspond to a first bearer or the first QoS flow corresponds to a second bearer, the relay generates a first mapping relationship, and indicates a first correspondence based on the first mapping relationship, and the relay device sends the first mapping relationship to the network device, so that the network device determines a correspondence between the one or more first QoS flows and the first bearer and the correspondence between the one or more first QoS flows and the second bearer by parsing the first mapping relationship. The network device may generate the first configuration information for the relay device based on the first mapping relationship, to resolve a problem that the relay device cannot configure a bearer between the relay device and the second terminal device.

In a possible implementation of the third aspect, the determining the first configuration information of the relay device based on the first message includes:
determining, based on the first message, that the network device supports the first terminal device in communicating with the second terminal device via the relay device;
receiving the first configuration information from the network device; and
determining a configuration of the first bearer between the relay device and the second terminal device based on the first configuration information.

In the foregoing solution, the first message may indicate the relay support capability of the network device. The relay device can obtain the relay support capability of the network device based on the first message. When the network device supports the first terminal device in communicating with the second terminal device via the relay device, the network device may generate first configuration information, where the first configuration information is carried in the first message, to determine a configuration of the first bearer between the relay device and the second terminal device, so that the communication between the first terminal device and the second terminal device can be implemented via the relay device.

In a possible implementation of the third aspect, the first configuration information includes the configuration of the first bearer and a mapping relationship between the first bearer and a second bearer.

In the foregoing solution, the second bearer is a bearer between the first terminal device and the second terminal device. To be specific, the second bearer is used for end-to-end communication between the first terminal device and the second terminal device. The network device supports the first terminal device in communicating with the second terminal device via the relay device. The network device may indicate the mapping relationship between the first bearer and the second bearer to the relay device, and the relay device may determine the mapping relationship between the first bearer and the second bearer via the first configuration information, so that the communication between the first terminal device and the second terminal device can be implemented via the relay device.

In a possible implementation of the third aspect, the first configuration information includes the configuration of the first bearer and a correspondence between the first QoS flow and the first bearer.

In the foregoing solution, the network device supports the first terminal device in communicating with the second terminal device via the relay device, and the first configuration information sent by the network device includes the configuration of the first bearer and the correspondence between the first QoS flow and the first bearer. In this implementation scenario, the network device may notify the relay device of the correspondence between the first QoS flow and the first bearer, so that the relay device determines the correspondence between the first QoS flow and the first bearer via the first configuration information, and the relay device determines a correspondence between the first bearer and a second bearer with reference to other obtained configuration information.

In a possible implementation of the third aspect, the method further includes:
determining an identity of a second QoS flow between the first terminal device and the relay device and a second QoS parameter requirement corresponding to the second QoS flow, where the second QoS flow corresponds to one or more first QoS flows, and the first QoS flow includes a QoS flow between the first terminal device and the second terminal device; and
sending second QoS flow information to the network device, where the second QoS flow information includes the identity of the second QoS flow and the second QoS parameter requirement corresponding to the second QoS flow.

In the foregoing solution, the relay device may send the second QoS flow information to the network device by using the first bearer as a whole. For example, the relay device determines a second QoS flow, where the second QoS flow corresponds to one or more first QoS flows, and the one or more first QoS flows correspond to the first bearer between the relay device and the second terminal device. After determining the second QoS flow information, the relay device sends the second QoS flow information to the network device. After receiving the second QoS flow information, the network device may determine an identity of the second QoS flow and a second QoS parameter requirement corresponding to the second QoS flow, so that the network device may configure a sidelink bearer based on the second QoS flow. In this implementation, the network device does not need to sense a relationship between the first terminal device, the relay device, and the second terminal device, and configures a sidelink bearer based on the second QoS flow.

In a possible implementation of the third aspect, the determining the second QoS parameter requirement corresponding to the second QoS flow includes:
determining, based on a first QoS parameter requirement of the one or more first QoS flows, the second QoS parameter requirement corresponding to the second QoS flow, where
the first QoS parameter requirement is a QoS parameter requirement of the first QoS flow between the relay device and the second terminal device; and
the second QoS parameter requirement is a QoS parameter requirement of the second QoS flow between the relay device and the second terminal.

In the foregoing solution, the relay device may determine the second QoS parameter requirement corresponding to the second QoS flow, for example, determine, based on the first QoS parameter requirement of the one or more first QoS flows corresponding to the second QoS flow, the second QoS parameter requirement corresponding to the second QoS flow, and select the first QoS parameter requirement to generate the second QoS parameter requirement. The relay device may generate the second QoS parameter requirement, so that the network device can allocate a configuration of a sidelink bearer to the relay device based on the second QoS parameter requirement, and the relay device configures the first bearer based on the configuration of the sidelink bearer.

In a possible implementation of the third aspect, the second QoS flow corresponds to one or more second bearers, and the second bearer includes a bearer between the first terminal device and the second terminal device.

In the foregoing solution, one or more second bearers are configured between the first terminal device and the second terminal device. The relay device determines that the second QoS flow corresponds to the one or more second bearers between the first terminal device and the second terminal device, and based on the correspondence between the second QoS flow and the one or more second bearers, the network device can configure a sidelink bearer for the first terminal device based on the second QoS flow.

In a possible implementation of the third aspect, the first configuration information further includes the configuration of the first bearer and a correspondence between the second QoS flow and the first bearer, and the first bearer includes a bearer between the relay device and the second terminal device.

In the foregoing solution, the network device supports the first terminal device in communicating with the second terminal device via the relay device, and the first configuration information sent by the network device includes the configuration of the first bearer and the correspondence between the second QoS flow and the first bearer. In this implementation scenario, the network device may notify the relay device of the correspondence between the second QoS flow and the first bearer, so that the relay device determines the correspondence between the second QoS flow and the first bearer via the first configuration information, and the relay device determines a correspondence between the first bearer and a second bearer with reference to other obtained configuration information.

In a possible implementation of the third aspect, the method further includes:
receiving second configuration information from the network device, where the second configuration information includes a configuration of the second bearer and a correspondence between the first QoS flow and the second bearer, where the second bearer includes a bearer between the first terminal device and the second terminal device; and
determining a correspondence between the first bearer and the second bearer based on the first configuration information and the second configuration information.

In the foregoing solution, the network device may send the configuration of the second bearer to the relay device. For example, the network device sends the second configuration information to the relay device, where the second configuration information includes the configuration of the second bearer and the correspondence between the first QoS flow and the second bearer. In this case, the relay device may determine the correspondence between the first QoS flow and the second bearer by parsing the second configuration information. With reference to parsing of first configuration information by the relay device, it can be learned that the relay device determines the correspondence between the first QoS flow and the first bearer via the first configuration information, and the relay device determines a correspondence between the first bearer and the second bearer based on the correspondence between the first QoS flow and each of the first bearer and the second bearer. In this embodiment of this application, the relay device may autonomously determine the correspondence between the first bearer and the second bearer by processing the first configuration information and the second configuration information, and does not need to be notified by a network device side, so that the communication between the first terminal device and the second terminal device can be implemented via the relay device.

In a possible implementation of the third aspect, the determining the first configuration information of the relay device based on the first message includes:
determining, based on the first message, that the network device supports the first terminal device in communicating with the second terminal device via the relay device;
obtaining third configuration information from the first message, where the third configuration information is used for communication between terminal devices; and
determining the first configuration information based on the third configuration information.

In the foregoing solution, the relay device is in an idle state, and the relay device may determine the configuration of the first bearer based on the configuration parameter included in the third configuration information. The first bearer includes the bearer between the relay device and the second terminal device. In this embodiment of this application, the relay device may configure the first bearer based on the indication of the network device, so that the communication between the first terminal device and the second terminal device can be implemented via the relay device.

In a possible implementation of the third aspect, the determining the first configuration information based on the third configuration information further includes:
determining the first configuration information based on the third configuration information and the mapping relationship between the first QoS flow and the second bearer, where the first configuration information includes a configuration of a first bearer between the relay device and the second terminal device.

In the foregoing solution, the first QoS flow includes a QoS flow between the first terminal device and the second terminal device. The relay device determines that the third QoS parameter requirement is an end-to-end QoS parameter requirement of the first QoS flow. The third configuration information sent by the network device may include a plurality of sidelink bearer configurations, and the relay device selects a sidelink bearer configuration from the third configuration information as second configuration information based on the third QoS parameter requirement corresponding to the first QoS flow. The relay device may determine the mapping relationship between the first QoS flow and the second bearer, and further determine the first configuration information, so that the communication between the first terminal device and the second terminal device can be implemented via the relay device.

In a possible implementation of the third aspect, the method further includes:
when the first message includes the first indication information, and the first message does not include third configuration information and/or a relay transmission resource, determining that the network device does not support the first terminal device in communicating with the second terminal device via the relay device, where the third configuration information is used for communication between terminal devices;
   or
when the first message includes the first indication information, and the first message does not include third configuration information and/or a relay transmission resource, sending a second request to the network device, where the second request is used to request the network device to send the third configuration information and/or the relay transmission resource.

In the foregoing solution, when the relay device is in the idle state, in addition to determining the first indication information in the first message, the relay device further needs to determine whether the first message includes third configuration information and/or a relay transmission resource. For example, when the first message does not include the third configuration information, the relay device determines that the network device does not support the first terminal device in communicating with the second terminal device via the relay device. For example, when the first message does not include the relay transmission resource, the relay device determines that the network device does not support the first terminal device in communicating with the second terminal device via the relay device. For example, when the first message does not include the third configuration information and the relay transmission resource, the relay device determines that the network device does not support the first terminal device in communicating with the second terminal device via the relay device. The relay device can determine, based on the message content carried in the first message, whether the network device supports the first terminal device in communicating with the second terminal device via the relay device, so that the communication between the first terminal device and the second terminal device can be implemented via the relay device.

In a possible implementation of the third aspect, the first message includes second indication information, where the second indication information indicates that the network device does not support the first terminal device in communicating with the second terminal device via the relay device.

In the foregoing solution, when the network device does not support the first terminal device in communicating with the second terminal device via the relay device, the network device may generate second indication information. When obtaining the second indication information from the first message, the relay device may determine that the network device does not support the first terminal device in communicating with the second terminal device via the relay device. Therefore, the relay device no longer configures a sidelink bearer.

In a possible implementation of the third aspect, the first message does not include first indication information, which indicates that the network device does not support the first terminal device in communicating with the second terminal device via the relay device.

In the foregoing solution, the network device may alternatively use an implicit indication manner. When supporting the first terminal device in communicating with the second terminal device via the relay device, the network device may generate first indication information, and include the first indication information in the first message. When the network device does not support the first terminal device in communicating with the second terminal device via the relay device, the network device may not generate first indication information, and the relay device may determine, based on a case in which the first message does not include the first indication information, that the network device does not support the first terminal device in communicating with the second terminal device via the relay device. Therefore, the first terminal device no longer configures a sidelink bearer.

In a possible implementation of the third aspect, the method further includes:
when the first message includes the first indication information, determining that the network device supports the first terminal device in communicating with the second terminal device via the relay device, where
the first indication information further indicates one or more thresholds.

In the foregoing solution, the network device may determine that the first indication information is used for the one or more thresholds, so that the first message may indicate the one or more thresholds. When obtaining the one or more thresholds from the first message, the relay terminal device determines that the network device supports the first terminal device in communicating with the second terminal device via the relay device. The network device may implicitly indicate, depending on whether the threshold is carried, whether the network device supports the first terminal device in communicating with the second terminal device via the relay device. Alternatively, the first terminal device obtains the first indication information from the first message, but the first indication information does not include a threshold configuration. In this case, it is considered by default that there is no threshold constraint when the relay device device performs a relay communication process.

In a possible implementation of the third aspect, the one or more thresholds include a third threshold, and the method further includes:
triggering a discovery procedure when signal quality of a link between the first terminal device and the relay device is greater than or equal to the third threshold, where the discovery procedure is used to search for the second terminal device.

In the foregoing solution, the relay device obtains the third threshold from the network device, and when the signal quality of the link between the first terminal device and the relay device is greater than or equal to the third threshold, the relay device triggers a discovery procedure, so that the first terminal device can communicate with the second terminal device via the relay device with support of the network device.

According to a fourth aspect, an embodiment of this application further provides a communication method, including:
sending a first message to a relay device, where the first message indicates a relay support capability of a network device.

In the foregoing solution, the network device may determine the first message, and notify a first terminal device of the first message, so that the network device notifies the relay device of the relay support capability of the network device. When determining that a network supports a relay, the relay device obtains first configuration information, and the relay device may configure a bearer needed for communication between the first terminal device and a second terminal device via the relay device, so that the first terminal device communicates with the second terminal device via the relay device. This resolves a current problem that a network device and a terminal device cannot support communication between terminal devices, and can implement the communication between the terminal devices via a relay device.

In a possible implementation of the fourth aspect, the first message includes first indication information, where the first indication information indicates that the network device supports a first terminal device in communicating with a second terminal device via the relay device.

In a possible implementation of the fourth aspect, the method further includes:
receiving a second message from the relay device, where the second message includes first quality of service QoS flow information, the first QoS flow information includes an identity of one or more first QoS flows and a first QoS parameter requirement of the one or more first QoS flows, and the first QoS parameter requirement is a QoS parameter requirement between the relay device and the second terminal device, where
the first QoS flow includes a QoS flow between the first terminal device and the second terminal device.

In a possible implementation of the fourth aspect, the method further includes:
receiving a first mapping relationship from the relay device, where the first mapping relationship indicates a first correspondence, and the first correspondence indicates that one or more first QoS flows are configured on a first bearer, or indicates a correspondence between the first QoS flow and a second bearer, where
the first QoS flow includes a QoS flow between the first terminal device and the second terminal device;
the first bearer includes a bearer between the relay device and the second terminal device; and
the second bearer includes a bearer between the first terminal device and the second terminal device.

In a possible implementation of the fourth aspect, the method further includes:
determining first configuration information based on the second message and the first mapping relationship; and
sending the first configuration information.

In a possible implementation of the fourth aspect, the first configuration information includes a configuration of a first bearer and a mapping relationship between a second bearer and the first bearer, where
the first bearer includes a bearer between the first terminal device and the relay device; and
the second bearer includes a bearer between the first terminal device and the second terminal device.

In a possible implementation of the fourth aspect, the first configuration information further includes a configuration of a first bearer and a correspondence between the first QoS flow and the first bearer, and the first bearer includes a bearer between the first terminal device and the relay device; and
the first QoS flow includes a QoS flow between the first terminal device and the second terminal device.

In a possible implementation of the fourth aspect, the method further includes:
sending second configuration information to the relay device, where the second configuration information includes a configuration of a second bearer and a correspondence between the first QoS flow and the second bearer, where the second bearer includes a bearer between the first terminal device and the second terminal device; and the first QoS flow includes a QoS flow between the first terminal device and the second terminal device.

In a possible implementation of the fourth aspect, the first message includes first indication information, the first message does not include third configuration information and/or a relay transmission resource, the third configuration information is used for communication between terminal devices, and the first indication information indicates that the network device supports the first terminal device in communicating with the second terminal device via the relay device.

In a possible implementation of the fourth aspect, the method further includes:
determining that the network device supports the first terminal device in communicating with the second terminal device via the relay device.

The first message includes first indication information, and the first indication information further indicates one or more thresholds.

In a possible implementation of the fourth aspect, the one or more thresholds include a third threshold.

The third threshold is used by the relay device to trigger a discovery procedure when signal quality of a link between the first terminal device and the relay device is greater than or equal to the third threshold, where the discovery procedure is used to search for the second terminal device.

There is an interaction relationship between the communication method performed on the foregoing network device side and the communication method performed on the foregoing terminal device side. For specific implemented technical effects, refer to the descriptions of the effects of the possible implementations in the first aspect.

According to a fifth aspect, an embodiment of this application further provides a terminal device, including:
a receiving module, configured to receive a first message from a network device, where the first message indicates a relay support capability of the network device; and
a processing module, configured to determine first configuration information of a first terminal device based on the first message, where the first configuration information is used by the first terminal device to communicate with a second terminal device via a relay device.

In the foregoing solution, the first terminal device receives the first message, and obtains the relay support capability of the network device by parsing the first message. When determining that a network supports a relay, the first terminal device obtains the first configuration information, and the first terminal device may configure a bearer needed for the communication between the first terminal device and the second terminal device via the relay device, so that the first terminal device communicates with the second terminal device via the relay device. This resolves a current problem that a network device and a terminal device cannot support communication between terminal devices, and can implement the communication between the terminal devices via a relay device.

In the fifth aspect of this application, composition modules of the terminal device may further perform the steps described in the first aspect and the possible implementations. For details, refer to the descriptions in the first aspect and the possible implementations.

According to a sixth aspect, an embodiment of this application further provides a network device, including:
a sending module, configured to send a first message to a first terminal device, where the first message indicates a relay support capability of a network device.

In the sixth aspect of this application, composition modules of the network device may further perform the steps described in the second aspect and the possible implementations. For details, refer to the descriptions in the second aspect and the possible implementations.

According to a seventh aspect, an embodiment of this application further provides a relay device. The relay device includes:
a receiving module, configured to receive a first message from a network device, where the first message indicates a relay support capability of the network device; and
a processing module, configured to determine first configuration information of the relay device based on the first message, where the first configuration information is used by a first terminal device to communicate with a second terminal device via the relay device.

In the seventh aspect of this application, composition modules of the relay device may further perform the steps described in the third aspect and the possible implementations. For details, refer to the descriptions in the third aspect and the possible implementations.

According to an eighth aspect, an embodiment of this application further provides a network device. The network device includes:
a processing module, configured to generate a first message based on a relay support capability of the network device; and
a sending module, configured to send the first message to a relay device, where the first message indicates the relay support capability of the network device.

In the eighth aspect of this application, composition modules of the network device may further perform the steps described in the fourth aspect and the possible implementations. For details, refer to the descriptions in the fourth aspect and the possible implementations.

According to a ninth aspect, an embodiment of this application further provides a communication system. The communication system includes the terminal device according to any one of the fifth aspect and the network device according to any one of the sixth aspect.

According to a tenth aspect, an embodiment of this application further provides a communication system. The communication system includes the terminal device according to any one of the seventh aspect and the network device according to any one of the eighth aspect.

According to an eleventh aspect, an embodiment of this application provides a computer-readable storage medium. The computer-readable storage medium stores instructions. When the instructions are run on a computer, the computer is caused to perform the method according to any one of the first aspect to the fourth aspect.

According to a twelfth aspect, an embodiment of this application provides a computer program product including instructions. When the computer program product runs on a computer, the computer is caused to perform the method according to any one of the first aspect to the fourth aspect.

According to a thirteenth aspect, an embodiment of this application provides a communication apparatus. The communication apparatus may include an entity such as a terminal device or a chip, and the communication apparatus includes a processor and a memory. The memory is configured to store instructions; and the processor is configured to execute the instructions in the memory, to cause the communication apparatus to perform the method according to any one of the first aspect to the fourth aspect.

According to a fourteenth aspect, this application provides a chip system. The chip system includes a processor, configured to support a terminal device, a network device, or a relay device in implementing a function in the foregoing aspects, for example, sending or processing data and/or information in the foregoing methods. In a possible design, the chip system further includes a memory. The memory is configured to store program instructions and data that are necessary for the terminal device, the network device, or the relay device. The chip system may include a chip, or may include a chip and another discrete component.

### BRIEF DESCRIPTION OF DRAWINGS

FIG. 1a is a diagram of a scenario of sidelink communication according to an embodiment of this application;
FIG. 1b is a diagram of a control plane protocol stack architecture in which UEs directly communicate with each other through a PC5 interface according to an embodiment of this application;
FIG. 1c is a diagram of a user plane protocol stack architecture in which UEs directly communicate with each other through a PC5 interface according to an embodiment of this application;
FIG. 2 is a diagram of a protocol stack of a discovery message according to an embodiment of this application;
FIG. 3 is a diagram of a communication architecture of a UE-to-UE relay according to an embodiment of this application;
FIG. 4 is a diagram of a user plane protocol stack of an L3 UE-to-UE relay according to an embodiment of this application;
FIG. 5 is a diagram of a user plane protocol stack of an L2 UE-to-UE relay according to an embodiment of this application;
FIG. 6 is a diagram of obtaining a sidelink bearer configuration by a first terminal device in a connected state and a second terminal device according to an embodiment of this application;
FIG. 7 is a diagram of a communication architecture of a communication system according to an embodiment of this application;
FIG. 8 is a diagram of a communication architecture of another communication system according to an embodiment of this application;
FIG. 9 is a block diagram of an interaction procedure between a network device and a first terminal device according to an embodiment of this application;
FIG. 10 is a block diagram of an interaction procedure between a network device and a relay device according to an embodiment of this application;
FIG. 11 is a diagram of a structure of a terminal device according to an embodiment of this application;
FIG. 12 is a diagram of a structure of a network device according to an embodiment of this application;
FIG. 13 is a diagram of a structure of a relay device according to an embodiment of this application;
FIG. 14 is a diagram of a structure of another terminal device according to an embodiment of this application;
FIG. 15 is a diagram of a structure of another network device according to an embodiment of this application; and
FIG. 16 is a diagram of a structure of another relay device according to an embodiment of this application.

### DESCRIPTION OF EMBODIMENTS

The following describes embodiments of this application with reference to the accompanying drawings.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, and this is merely a discrimination manner that is used when objects having a same attribute are described in embodiments of this application. In addition, the terms "include", "have" and any other variants mean to cover the non-exclusive inclusion, so that a process, method, system, product, or device that includes a series of units is not necessarily limited to those units, but may include other units not expressly listed or inherent to such a process, method, product, or device.

First, technical terms used in embodiments of this application are described as follows:

### Sidelink (Sidelink) communication:

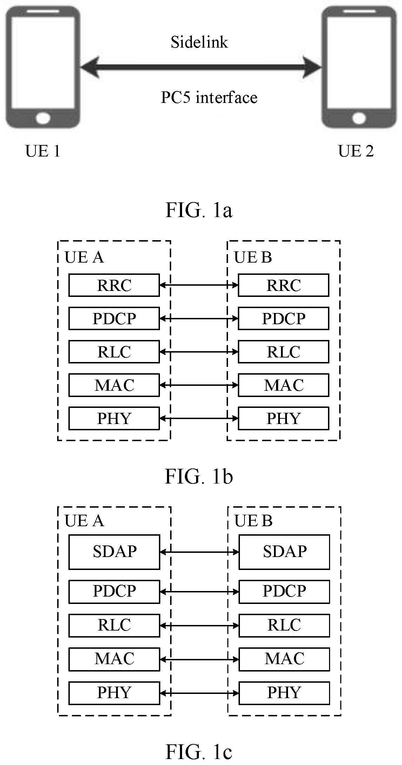

In a wireless communication system, data communication may be performed between UEs through a network, or communication between UEs may be directly performed without using a network device, as shown in FIG. 1a. An interface between UEs is referred to as a PC5 interface, and is similar to a Uu interface between a UE and a base station. A link between UEs is referred to as a sidelink, and a typical application scenario of the sidelink communication is vehicle-to-everything (V2X, Vehicle-to-everything). In the vehicle-to-everything, each vehicle is one UE, and data transmission may be directly performed between UEs over a sidelink without using a network. In this way, a communication delay can be effectively shortened.

A control plane protocol stack of the sidelink communication is shown in FIG. 1b, and is sequentially an RRC (Radio Resource Control, radio resource control) layer, a PDCP (Packet Data Convergence Protocol, packet data convergence protocol) layer, an RLC (Radio Link Control, radio link control) layer, a MAC (Media Access Control, media access control) layer, and a PHY layer (Physical Layer, physical layer) from top to bottom. A user plane protocol stack is shown in FIG. 1c, and is sequentially an SDAP (Service Data Adaptation Protocol, service data adaptation protocol) layer, a PDCP (Packet Data Convergence Protocol, packet data convergence protocol) layer, an RLC (Radio Link Control, radio link control) layer, a MAC (Media Access Control, media access control) layer, and a PHY layer (Physical Layer, physical layer) from top to bottom. A UE that performs sidelink communication may be within network coverage, and the UE may be in any RRC state. For example, the RRC state may include an RRC connected state, idle (Idle/Inactive) state, or out of coverage (Out of Coverage, OoC) state. Alternatively, the UE may be out of network coverage.

In a sidelink communication process, a pair of a source L2 ID (Source Layer-2 Identifier, source layer-2 identifier) and a destination L2 ID (Destination Layer-2 Identifier, destination layer-2 identifier) identifies a source UE and a destination UE in the communication process. The sidelink supports three communication manners: broadcast, unicast, and multicast.

First, broadcast is described as follows. Sidelink broadcast communication is similar to base station broadcast. To be specific, a UE sends data of a broadcast service externally without encryption, and any other UE within an effective receiving range that is interested in the broadcast service can receive the data of the broadcast service.

In unicast communication, a unicast connection needs to be first established between two UEs. After the establishment of the unicast connection is completed, the two UEs may perform data communication based on a negotiated identifier, where data may be encrypted or may not be encrypted. Compared with broadcast communication, in the unicast communication, the unicast communication can be performed only between two UEs that have established the unicast connection.

Multicast communication is communication between all UEs in a communication group, and any UE in the group can receive and send multicast service data in the group.

In the sidelink communication process, regardless of unicast, multicast, or broadcast, a transmitter UE includes a source L2 ID and a destination L2 ID in a subheader of each sidelink MAC PDU (Media Access Control Protocol Data Unit, media access control protocol data unit) and SCI (Sidelink control information, sidelink control information), so that data is transmitted from a transmit end to a correct receive end.

The source L2 ID is allocated by the transmit end UE. The transmit end UE selects different source L2 IDs based on different communication types (unicast, multicast, or broadcast) and standards (for example, LTE (Long Term Evolution, Long Term Evolution) or NR (New Radio, new radio)). If privacy protection needs to be performed on a sidelink service type (service type) of the UE, to avoid being tracked and identified by another UE, the source UE further needs to periodically update the source L2 ID. The destination L2 ID depends on a service type. A correspondence between the destination L2 ID and a broadcast/multicast/unicast service is defined through pre-configuration, an application layer server, a core network configuration, or the like. In a broadcast/multicast communication process, a transmit end UE (or referred to as a source UE) determines a corresponding destination L2 ID based on a broadcast/multicast service type. The destination L2 ID is predefined in a protocol. In a unicast communication process, a source UE first needs to establish a unicast connection with a destination UE. In a unicast connection establishment process, the transmit end UE first selects a default (default) destination L2 ID, and the default destination L2 ID is related to a service type of unicast communication. After the unicast connection is established, the source UE continues to perform unicast communication by using the default destination L2 ID.

### Discovery procedure (Discovery Procedure):

A UE supporting proximity services searches for a nearby UE through the discovery procedure, and performs sidelink communication with the nearby UE.

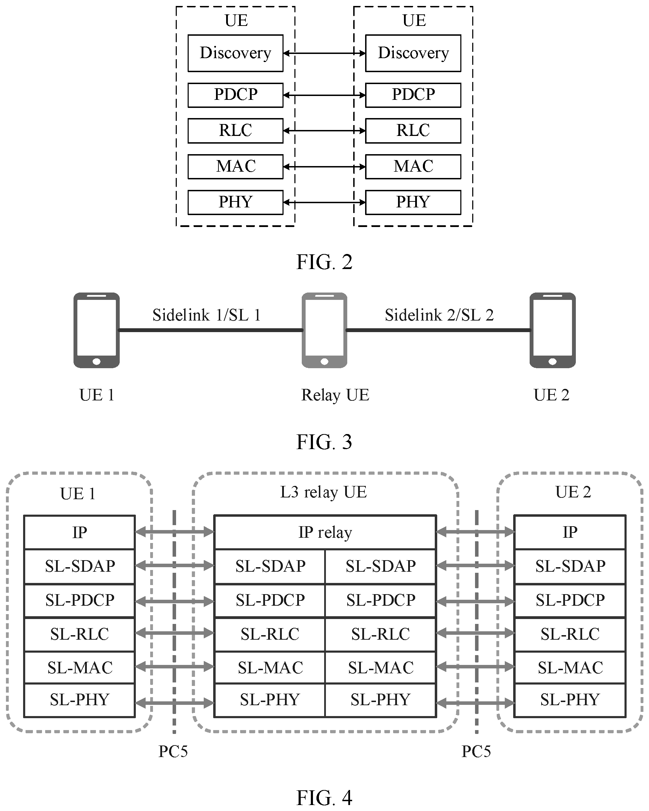

A protocol stack of a discovery (Discovery) message is shown in FIG. 2. A discovery protocol layer of a UE generates a discovery message, delivers the discovery message to a PDCP protocol layer of an AS (access stratum, access stratum), and sends the discovery message to a peer UE via a bottom layer. The AS includes an SDAP layer, an RRC layer, a PDCP layer, an RLC layer, a MAC layer, and a PHY layer, and is a general term of the foregoing protocol layers.

There are two models in the discovery procedure: a model A and a model B. In the model A discovery model, UEs may be classified into two types: an announcing UE and a monitoring UE. The announcing UE broadcasts a discovery message (discovery message). The discovery message is also referred to as an announcement message (announcement message). The announcement message may carry specific information of the announcing UE, for example, a service type that can be provided, which is used by a surrounding UE to determine whether the service type that can be provided by the announcing UE is needed. After monitoring and receiving the announcement message, the adjacent monitoring UE determines, based on the content carried in the discovery message, whether to use the announcing UE as a peer UE of sidelink communication.

In the model B discovery model, UEs may be classified into two types: a discoverer UE and a discoveree UE. The discoverer UE broadcasts a discovery message. The discovery message is also referred to as a solicitation message (solicitation message), and the solicitation message carries information about a service type in which the discoverer UE is interested. After monitoring and receiving the solicitation message, if finding that the discoveree UE meets a service requirement of the discoverer UE, the discoveree UE returns a response message (response message) to the discoverer UE.

Similar to that in the sidelink communication, the discovery message carries a source L2 ID and a destination L2 ID that are used by the UE to send or receive the discovery message. The source L2 ID is independently allocated by a transmitter UE, and the destination L2 ID is a predefined or pre-configured default destination L2 ID. It should be noted that the default destination L2 ID is different from the default destination L2 ID used in the sidelink unicast communication, and is dedicated to the discovery message.

### Radio bearer (Radio Bearer, RB):

The radio bearer is a general term of a series of protocol entities and configurations that are allocated by a base station to a UE, and is a resource that is provided by a layer 2 and that is used to transmit user data between the UE and the base station. The radio bearer includes a series of resources allocated by a PDCP protocol entity, an RLC protocol entity, a MAC protocol entity, and a PHY. Radio bearers are classified into a data radio bearer (Data Radio Bearer, DRB) and a signaling radio bearer (Signaling Radio Bearer, SRB). The DRB is for carrying data, and the SRB is for carrying a signaling message. In a sidelink communication scenario, UEs communicate with each other via a sidelink radio bearer (Sidelink Radio Bearer, SLRB), including a sidelink data radio bearer SL DRB and a sidelink signaling radio bearer SL SRB. A protocol entity below an RLC layer is referred to as an RLC bearer, and a corresponding configuration is provided in an RLC bearer configuration.

### Unicast connection establishment:

A unicast connection is established between UEs through a unicast connection establishment procedure. The UE that initiates the unicast connection establishment procedure is referred to as an initiating UE, and a peer UE of the initiating UE is referred to as a target (target) UE. During the unicast connection, the initiating UE sends, to the target UE, a unicast connection establishment request Direct communication request (DCR) message carrying L2 IDs and user information User Info (carrying information related to an upper-layer application layer) of the initiating UE and the target UE. After receiving the DCR message, the target UE determines, based on the User Info in the DCR message, whether the target UE can receive the unicast connection establishment request. If the target UE can receive the unicast connection establishment request, the target UE returns a unicast connection establishment accept Direct communication accept (DCA) message to the initiating UE. If the target UE cannot receive the unicast connection establishment request, the target UE returns a reject (reject) message to the initiation UE.

To expand a sidelink communication range, a terminal device-to-terminal device relay (UE-to-UE Relay) is to be introduced into a communication standard. An architecture of a communication system used in an embodiment of this application is shown in FIG. 3. In a UE-to-UE relay communication scenario, unicast communication is needed between a transmitter UE 1 and a receiver UE 2, and data and signaling are transferred between the UE 1 and the UE 2 via a relay device (Relay UE). The relay UE may be one or more UEs. In this embodiment of this application, the UE 1 is also referred to as a remote UE, the UE 2 may also be referred to as a peer remote UE, the remote UE that initiates U2U relay connection establishment is also referred to as a source terminal device (source UE), and the peer remote UE to which the source UE expects to establish a connection via a relay is also referred to as a target terminal device (target UE).

The UE-to-UE relay is implemented in two manners: a L3 (Layer 3/layer 3)-based relay manner and a L2 (Layer 2/layer 2)-based relay manner.

In the L3-based U2U relay manner, user plane data is relayed and forwarded at an internet protocol (Internet Protocol, IP) layer. A corresponding user plane protocol stack is shown in FIG. 4. When a data packet sent by the UE 1 to the UE 2 is relayed by the relay UE, the relay UE needs to parse the data packet to the IP layer, and determine, based on information like an IP address, the destination end UE 2 to which the data packet is to be forwarded.

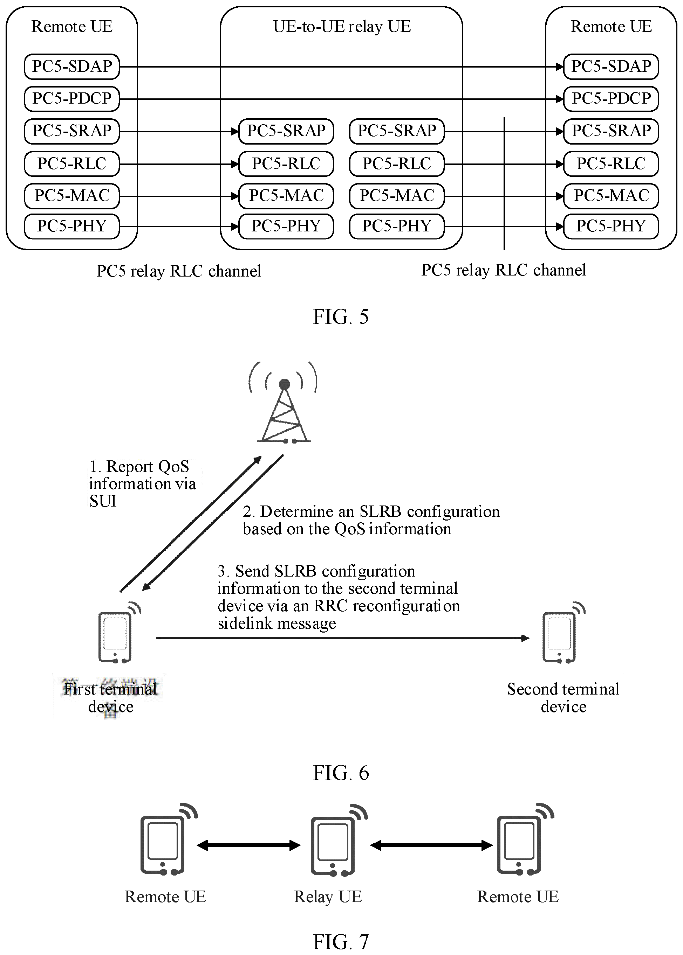

In the L2-based U2U relay manner, user plane data is relayed and forwarded below a PDCP layer. A user plane protocol stack is shown in FIG. 5. The relay UE maintains only a PC5 relay RLC bearer (or referred to as a PC5 relay RLC channel), including an RLC layer, a MAC layer, and a PHY layer. In addition, an SRAP adaptation layer (Adaptation layer) is added between the RLC layer and the PDCP layer. A main function of the adaptation layer is bearer multiplexing and splitting. To be specific, the adaptation layer supports multiplexing of different radio bearers onto one RLC bearer or splitting of radio bearer data multiplexed on one RLC bearer.

In a sidelink communication scenario, when signal quality between UEs is poor, or a sidelink connection cannot be established between UEs, if the UE supports U2U relay communication, the UE may initiate a discovery procedure to search for an appropriate surrounding relay UE, and communicate with a peer UE via the relay UE.

Relay discovery may be performed in two manners: model A and model B. The model B is used as an example. In the model B manner, a remote UE (or a source UE) broadcasts a discovery solicitation (Discovery solicitation) message, where the message carries a discovery message type, user information of the remote UE, user information of a peer remote UE (or a target UE), and a relay service code (RSC, relay service code). The RSC indicates, in a UE-to-UE relay discovery procedure, a connection service that a UE-to-UE relay can or needs to provide for the source UE. The relay UE, the source UE, and the target UE may learn, based on the RSC, whether a layer-2 U2U relay service or a layer-3 U2U relay service is to be provided.

After receiving the discovery solicitation message sent by the source UE, the relay UE determines, based on the RSC, to serve as a relay to continue to broadcast the discovery solicitation message. The message includes the discovery message type, the user information of the source UE, user information of the relay UE, and the user information of the target UE. The relay UE allocates an L2 ID as a source L2 ID of the solicitation message.

The target UE info in the solicitation message received by the target UE matches the target UE. Therefore, the target UE returns a discovery response (Discovery Response) message, and uses the source L2 address of the relay UE as a destination L2 ID of the discovery response message.

Then, the relay UE returns a discovery response message to the source UE. The message includes the discovery message type, the user information of the source UE, the user information of the relay UE, and the user information of the target UE. The source UE may receive discovery response messages forwarded by a plurality of relay UEs, in other words, the plurality of relay UEs intend to provide relay for communication between the source UE and the target UE. In this case, the source UE may perform selection from the relay UEs, determine a relay UE, and establish a relay connection to the peer target UE via the relay UE.

In NR SL unicast communication, when two UEs perform unicast communication, a user plane protocol stack is shown in FIG. 1c. First, a Tx UE (namely, a transmit end UE) generates, based on a requirement of an application (APP) layer, a quality of service (Quality of Service, QoS) parameter, including a series of performance requirement parameters such as a PQI (PC5 5QI), an allocation and retention priority (Allocation and Retention Priority, ARP), and a guaranteed bit rate (guaranteed bit rate, GBR). The UE maps, to a user service data flow (QoS flow) based on the QoS parameter, IP data or non-IP data that arrives at the APP layer. Then, the QoS flow enters an access stratum (Access Stratum, AS) of the UE, and is transmitted in a manner of a sidelink radio bearer (Sidelink radio bearer, SLRB). As shown in FIG. 1c, the AS stratum includes an SDAP layer, a PDCP layer, an RLC layer, a MAC layer, and a PHY layer.

The user service data flow may also be referred to as a service data flow or a QoS flow, namely, a user service data flow using the QoS parameter. The user service data flow is used to perform data transmission, to implement interaction between a user and a data network. Service quality may also be referred to as quality of service, and is a common performance indicator of a communication system or channel. Different systems and services have different definitions of the quality of service, which may include a jitter, a delay, a packet loss rate, a bit error rate, a signal-to-noise ratio, and the like. The service quality is used to measure transmission quality and effectiveness of services of a transmission system, and evaluate a capability of a service provider to meet customer requirements.

To ensure communication, the transmitter UE and the receiver UE need to have a consistent SLRB bearer configuration, to control data sending or receiving. The SLRB bearer configuration may include:
an SDAP configuration: including whether there is an SDAP header, whether an SLRB is a default SLRB, a mapping relationship between the QoS flow and the SLRB, and a communication mode (for example, unicast, multicast, or broadcast);
a PDCP configuration: including duration of a packet loss timer, a PDCP sequence number length, whether out-of-order transmission is performed, and the like;
an RLC configuration: including an RLC transmission mode, an RLC sequence number length, a maximum quantity of allowed ARQ retransmissions in an RLC acknowledged mode (acknowledged mode, AM), and the like; and
an LCH configuration: including a parameter related to logical channel prioritization (Logical Channel Prioritization, LCP), for example, a logical channel priority, a prioritized bit rate (Prioritized Bit Rate, PBR), or bucket size duration (Bucket Size Duration, BSD), an indication indicating whether a configured grant type 1 is allowed to be used, whether a HARQ feedback is enabled, a scheduling request (scheduling request, SR) resource associated with an LCH, a logical channel group (Logical channel group, LCG) to which the LCH belongs, and the like.

When the UE is in different connected states, SLRB bearer configuration methods in NR SL are different. The following describes SLRB bearer configuration processes of the UE in different states.

SLRB configuration process for a UE in a connected state:

As shown in FIG. 6, a first terminal device in the connected state and a second terminal device obtain a sidelink bearer configuration. For example, the first terminal device is a Tx UE, and the second terminal device is a Rx UE. An interaction procedure between the first terminal device and the second terminal device mainly includes the following three steps.

Step 1: The first terminal device reports QoS information to a base station via SidelinkUEInformation (SUI).

Step 2: The base station determines an SLRB configuration based on the QoS information, and sends SLRB configuration information to the first terminal device.

Step 3: The first terminal device sends the SLRB configuration information to the second terminal device via an RRC reconfiguration sidelink message.

For example, when the Tx UE is in the connected state, the Tx UE reports a QoS information list to a network via the SidelinkUEInformation (SUI) message. The QoS information list includes information of each QoS flow identity (QoS flow ID for short) and a corresponding QoS parameter requirement. The base station performs SLRB bearer configuration (briefly referred to as SLRB configuration) for the UE based on the QoS information reported by the Tx UE, and delivers the SLRB bearer configuration to the Tx UE via an RRC configuration message.

After obtaining the SLRB configuration from the base station, the Tx UE sends the needed SLRB configuration information to the Rx UE via the RRCReconfigurationSidelink message. After receiving the RRC message, the Rx UE may establish an SLRB bearer based on the received SLRB configuration information.

SLRB configuration process for a UE in an idle (Idle/Inactive) state:
When a Tx UE is in the idle/inactive state, the Tx UE performs SLRB bearer configuration based on content of a system message (such as SIB12) delivered by a network. Similarly, the Tx UE sends SLRB configuration information to a Rx UE via the RRCReconfigurationSidelink message, as shown in step 3 in FIG. 6.

SLRB configuration process for a UE being out of coverage (OoC):

When the UE is in an OoC state, in other words, there is no sidelink frequency coverage, a Tx UE obtains SLRB configuration information from pre-configuration information, and sends the SLRB configuration information to a Rx UE via the RRCReconfigurationSidelink message.

In a UE-to-UE relay architecture, data sent by a remote UE (for example, the UE 1 in FIG. 3) to a peer remote UE (for example, the UE 2 in FIG. 3) needs to pass through two path segments. As shown in FIG. 3, to ensure an end-to-end (End-to-End, E2E) QoS parameter requirement, after a connection between the remote UE and a relay UE is established, the relay UE first obtains end-to-end QoS information (QoS flow information and a parameter requirement of each QoS flow) between the remote UEs, and performs QoS division, to be specific, divides end-to-end QoS into QoS parameter requirements on a first link segment (between the UE 1 and the relay UE) and a second link segment (between the relay UE and the UE 2).

When the source UE is in the connected state and is used as a Tx UE, the source UE needs to report QoS information to a gNB. The gNB determines a corresponding SLRB bearer configuration based on the information reported by the UE, and delivers the SLRB bearer configuration to the UE. In a U2U relay scenario, the UE may report QoS information of each link segment, and request the base station to perform configuration. If the base station does not sense the UE-to-UE relay scenario, the base station provides an SLRB configuration for direct communication according to a conventional technology, in other words, the base station does not sense that the UE performs U2U relay communication.

In another possible implementation, only when the base station supports a U2U relay capability, a UE that communicates with the base station can perform U2U relay communication. Embodiments of this application provide a specific SLRB bearer configuration solution, to resolve a problem that a UE cannot be configured in a U2U relay in the conventional technology.

In some embodiments of this application, the base station may participate in the configuration in the U2U relay as little as possible. In this embodiment of this application, a solution in which the UE obtains the U2U relay-related configuration when the base station needs to support the U2U relay capability is mainly considered. For example, in this embodiment of this application, specific implementation solutions such as a threshold configuration for selection of a relay UE, a bearer configuration needed for U2U relay communication, and a resource configuration (for example, a resource pool configuration) for sending and receiving a message are provided, and impact of the base station on the configuration in the U2U relay can be reduced.

In this embodiment of this application, the base station can interact with the UE and configure the UE in the U2U relay when the participation of the base station is reduced. Specifically, the base station indicates, in the system message, that the U2U relay is supported. For example, the base station may use an indication method: an explicit indication or an implicit indication like a threshold configuration. The UE executes the discovery procedure based on the indication of the base station and the threshold configuration of the base station, and establishes a U2U relay connection. The QoS information reported by the UE in the connected state is used by the base station to provide the sidelink bearer configuration or a U2U relay dedicated configuration. In addition, the UE may further report a U2U relay indication, to request the base station to allocate a mode 1 resource. The UE in the idle state determines the U2U relay configuration based on the sidelink bearer configuration in the system message sent by the base station.

The technical solutions in embodiments of this application may be applied to various communication systems for data processing, for example, a code division multiple access (code division multiple access, CDMA) system, a time division multiple access (time division multiple access, TDMA) system, a frequency division multiple access (frequency division multiple access, FDMA) system, an orthogonal frequency division multiple access (orthogonal frequency-division multiple access, OFDMA) system, a single-carrier frequency division multiple access (single-carrier FDMA, SC-FDMA) system, and other systems. The terms "system" and "network" are interchangeable. The CDMA system may implement wireless technologies such as universal terrestrial radio access (universal terrestrial radio access, UTRA) and CDMA2000. The UTRA may include a wideband CDMA (wideband CDMA, WCDMA) technology and another variant technology of CDMA. CDMA2000 may cover the interim standard (interim standard, IS) 2000 (IS-2000), the IS-95 standard, and the IS-856 standard. The TDMA system may implement wireless technologies such as a global system for mobile communications (global system for mobile communications, GSM). The OFDMA system may implement wireless technologies such as evolved universal terrestrial radio access (evolved UTRA, E-UTRA), ultra mobile broadband (ultra mobile broadband, UMB), IEEE 802.11 (Wi-Fi), IEEE 802.16 (WiMAX), IEEE 802.20, and Flash OFDMA. The UTRA corresponds to a UMTS, and the E-UTRA corresponds to an evolved version of the UMTS. A new version of the UMTS that uses the E-UTRA is used in long term evolution (long term evolution, LTE) and various versions evolved based on LTE in 3GPP. A 5th generation (5th Generation, "5G" for short) communication system or new radio (New Radio, "NR" for short) is a next generation communication system under study. In addition, the communication system is further applicable to a future-oriented communication technology, and is applicable to the technical solutions provided in embodiments of this application. A system architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of a network architecture and emergence of a new service scenario, the technical solutions provided in embodiments of this application are also applicable to similar technical problems.

First, a system architecture to which embodiments of this application are applied is described. Embodiments of this application are applicable to a UE-to-UE relay communication scenario. FIG. 7 is a diagram of a possible structure of a radio access network (radio access network, RAN) according to an embodiment of this application. The RAN may be a base station access system in a 2G network (that is, the RAN includes a base station and a base station controller), may be a base station access system in a 3G network (that is, the RAN includes a base station and a radio network controller (radio network controller, RNC)), may be a base station access system in a 4G network (that is, the RAN includes an eNB and an RNC), may be a base station access system in a 5G network, or may be a base station access system in a 6G network or a new radio (NR) network.

Embodiments of this application may be applied to a layer 2-based relay U2U relay.

Embodiments of this application may be applied to an LTE system, an NR system, a next-generation wireless local area network system, and the like.

Embodiments of this application may be further extended to a scenario in which there are a plurality of relays. To be specific, a remote UE establishes a U2U relay connection to a peer remote UE via a plurality of relay UEs, and performs end-to-end communication after obtaining a communication configuration. Further, in embodiments of this application, another type of UE-to-UE communication link, for example, Wi-Fi or Bluetooth, may be extended between the remote UE and the relay UE. This is not limited herein.

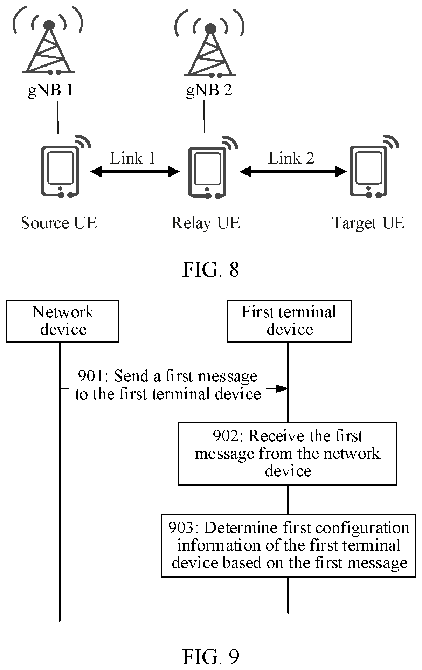

The following describes functions of network elements/modules in embodiments of this application. As shown in FIG. 8, a communication system provided in an embodiment of this application includes:
an access network device: is a RAN node or a device that connects a terminal to a wireless network, and may also be referred to as a network device. For example, the network device includes a base station, for example, an LTE eNB, an NR gNB, or an ng-eNB. The access network device is connected to a core network EPC or a 5GC.

The network device may be any device having a wireless transceiver function or a chip disposed in the device having the wireless transceiver function. The network device includes but is not limited to a base station (for example, a base station BS, a NodeB NodeB, an evolved NodeB eNodeB or eNB, a gNodeB gNodeB or gNB in a 5th generation 5G communication system, a base station in a future communication system, an access node in a Wi-Fi system, a wireless relay node, or a wireless backhaul node) and the like. The base station may be a macro base station, a micro base station, a pico base station, a small cell, a relay station, or the like. A plurality of base stations may support a network using the foregoing one or more technologies, or a future evolved network. The core network may support a network using the foregoing one or more technologies or a future evolved network. The base station may include one or more co-site or non-co-site transmission reception points (transmission reception points, TRPs). The network device may alternatively be a radio controller, a central unit (central unit, CU), a distributed unit (distributed unit, DU), or the like in a cloud radio access network (cloud radio access network, CRAN) scenario. The network device may alternatively be a server, a wearable device, a vehicle-mounted device, or the like. The following uses an example in which the network device is a base station for description. The plurality of network devices may be base stations of a same type, or may be base stations of different types.

The base station may communicate with a terminal device, or may communicate with a terminal device via a relay station. The terminal device may support communication with a plurality of base stations using different technologies. For example, the terminal device may support communication with a base station supporting an LTE network, may support communication with a base station supporting a 5G network, or may support a dual connection to the base station supporting the LTE network and the base station supporting the 5G network. For example, the terminals are connected to a RAN node of a wireless network. Currently, some RAN nodes are, for example, a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), or a wireless fidelity (wireless fidelity, Wi-Fi) access point (access point, AP). In a network structure, the network device may include a central unit (central unit, CU) node, a distributed unit (distributed unit, DU) node, or a RAN device including a CU node and a DU node.

The terminal device is alternatively referred to as a user equipment (user equipment, UE), a mobile station (mobile station, MS), a mobile terminal (mobile terminal, MT), a terminal, or the like, and is a device that provides voice and/or data connectivity for a user, or a chip disposed in the device, for example, a hand-held device or a vehicle-mounted device with a wireless connection function. Currently, some terminal devices are, for example, a mobile phone (mobile phone), a tablet, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), or a wireless terminal in a smart home (smart home). The terminal device provided in embodiments of this application may be a low-complexity terminal device and/or a terminal device in a coverage enhancement mode A.

In embodiments of this application, the terminal devices are devices that can perform sidelink communication, and are classified into two types: a relay UE and a remote UE. The relay UE is a terminal that can provide a relay service, and may also be referred to as a relay device or a relay terminal device; and the remote UE is a terminal that supports mutual communication via the relay service.

For example, in a U2U relay scenario, the remote UE is used as a terminal device that initiates a service, and end-to-end communication is performed between remote UEs. The remote UEs may be further classified into a source (Source) UE and a target (Target) UE. The source (Source) UE is connected to a gNB 1, and the target (Target) UE is connected to a gNB 2. The remote UE or the relay UE may be in an RRC connected state, an RRC idle state, an RRC inactive state, or an OoC state. The remote UE and the relay UE are connected over a sidelink, and perform unicast communication after the connection is established. The relay UE may be configured to assist the source UE in communicating with the target UE, to expand a communication range and forward data between the remote UEs.

An embodiment of this application provides a communication method, which is applicable to an end-to-end relay scenario. FIG. 9 is a schematic flowchart of interaction between a network device and a first terminal device according to an embodiment of this application. The first terminal device may be the foregoing remote UE. The communication method provided in this embodiment of this application mainly includes the following steps:
901: The network device sends a first message to the first terminal device, where the first message indicates a relay support capability of the network device.

The network device determines whether to support the first terminal device in performing communication via a relay device. The communication herein may also be referred to as device-to-device communication. The network device determines the relay support capability of the network device. The relay support capability may include that the network device supports the first terminal device in performing communication between devices via the relay device, or the network device does not support the first terminal device in performing communication between devices via the relay device. For example, that the first terminal device performs communication between devices via the relay device may be U2U relay communication.

After the network device determines the relay support capability of the network device, the network device generates the first message. The first message may be specifically a system message, or the first message is a message of another type. This is not limited herein.

It may be understood that, in this embodiment of this application, the network device may determine, based on the capability of the network device, whether the network device supports the terminal device in performing communication via the relay device. For example, the network device indicates, in the system message, that a U2U relay is supported.

902: The first terminal device receives the first message from the network device, where the first message indicates the relay support capability of the network device.

In this embodiment of this application, the first terminal device is a remote terminal device, and the first terminal device may communicate with the network device. For example, the first terminal device is in a connected state, and the first terminal device receives the first message from the network device. After receiving the first message, the first terminal device may parse the first message, and determine the relay support capability of the network device based on the indication of the first message.

903: The first terminal device determines first configuration information of the first terminal device based on the first message, where the first configuration information is used by the first terminal device to communicate with a second terminal device via the relay device.

The first terminal device receives the first message, and obtains the relay support capability of the network device by parsing the first message. When determining that a network supports a relay, the first terminal device obtains the first configuration information. In this embodiment of this application, the first configuration information may be used by the first terminal device to communicate with the second terminal device via the relay device. There are a plurality of implementations of the first configuration information, and the first configuration information includes a plurality of types of content. For details, refer to subsequent example descriptions in this embodiment of this application.

In this embodiment of this application, after obtaining the first configuration information, the first terminal device may configure a bearer needed for the communication between the first terminal device and the second terminal device via the relay device, so that the first terminal device communicates with the second terminal device via the relay device.

In some embodiments of this application, the first message includes first indication information, where the first indication information indicates that the network device supports the first terminal device in communicating with the second terminal device via the relay device.

The network device may notify the first terminal device in an explicit indication manner. To be specific, the first message generated by the network device includes the first indication information. After obtaining the first indication information from the first message, the first terminal device determines, based on the first indication information, that the network device supports the first terminal device in communicating with the second terminal device via the relay device. A specific implementation of the first indication information is not limited in embodiments of this application. For example, the first indication information may be an indication field in a system message, and the first terminal device may obtain the first indication information by parsing the indication field.

The following describes an implementation of the first indication information in the first message. For example, the first message is a system message. The system message may include a SIB12, and the SIB12 is a system message block indicating a sidelink communication-related configuration.

The first indication information includes at least one of the following: layer 2 terminal device-to-terminal device relay information and layer 3 terminal device-to-terminal device relay discovery information.

The layer 2 terminal device-to-terminal device relay information is specifically L2 U2U relay capability support indication information, and the layer 3 terminal device-to-terminal device relay discovery information is specifically an L3 U2U relay capability support indication.

An example in which a base station supports an L3 U2U relay is used. The SIB12 carries sl-L3U2U-RelayDiscovery, and when a value of sl-L3U2U-RelayDiscovery is enable, it indicates that the base station supports the first terminal device in communicating with the second terminal device via the relay device.

The first message sent by the network device may include the first indication information. The following describes a specific application scenario in which the first terminal device determines the relay support capability of the network device based on the first indication information.

In some embodiments of this application, the communication method performed by the network device further includes:
In some embodiments of this application, the first terminal device is in the connected state, and the communication method performed by the first terminal device may further include the following steps:
The network device receives a third message from the first terminal device, where the third message includes third QoS flow information, the third QoS flow information includes an identity of one or more first QoS flows and a fourth QoS parameter requirement of the one or more first QoS flows, and the fourth QoS parameter requirement is a QoS parameter requirement of the first QoS flow between the first terminal device and the second terminal device.

The network device receives a second message from the first terminal device, where the second message includes first quality of service QoS flow information, the first QoS flow information includes an identity of one or more first QoS flows and a first QoS parameter requirement of the one or more first QoS flows, and the first QoS parameter requirement is a QoS parameter requirement of the first QoS flow between the first terminal device and the relay device, where
the first QoS flow includes a QoS flow between the first terminal device and the second terminal device.

Correspondingly, the communication method performed by the first terminal device includes:
The first terminal device determines first quality of service QoS flow information between the first terminal device and the relay device.

The first terminal device sends a second message to the network device, where the second message includes the first QoS flow information, and the first QoS flow information includes an identity of one or more first QoS flows and a first QoS parameter requirement of the one or more first QoS flows, where
the first QoS flow includes a QoS flow between the first terminal device and the second terminal device.

In a possible implementation, the first terminal sends the third QoS flow information to the relay device. The relay device divides the fourth QoS parameter requirement, and sends, to the first terminal device, the first QoS parameter requirement obtained through division, so that the first terminal device determines the first quality of service QoS flow information.

The first terminal device performs upper-layer interaction with the second terminal device, to obtain first QoS flow (flow) information. There are one or more QoS flows between the first terminal device and the second terminal device. The QoS flow between the first terminal device and the second terminal device is defined as a first QoS flow, and the first QoS flow may also be referred to as a "remote UE end-to-end QoS flow". The first QoS flow information includes an identity of the first QoS flow and an end-to-end QoS parameter requirement of the QoS flow.

It can be learned from the foregoing descriptions of the UE-to-UE relay architecture that a relay UE obtains end-to-end QoS information between remote UEs, where the end-to-end QoS information includes QoS flow information and a parameter requirement of each QoS flow, and the relay UE performs QoS division, to be specific, divides end-to-end QoS into QoS parameter requirements on a first link segment (between a UE 1 and the relay UE) and a second link segment (between the relay UE and a UE 2). The first QoS parameter requirement of the one or more first QoS flows included in the first QoS flow information is a QoS parameter requirement obtained through division.

The first QoS flow information includes the identity of the first QoS flow. For example, an identity of a specific first QoS flow is a QoS flow ID 1. The first QoS flow information generated by the first terminal device includes the identity of the one or more first QoS flows and the first QoS parameter requirement of the one or more first QoS flows. Each first QoS flow has a corresponding first QoS parameter requirement, and the QoS parameter requirement may also be referred to as a QoS performance requirement.

In some embodiments of this application, the second message is specifically an RRC message. The network device may receive the second message, and determine the first QoS flow information by parsing the second message. The network device obtains the identity of the one or more first QoS flows and the first QoS parameter requirement of the one or more first QoS flows based on the first QoS flow information, and the network device may configure a sidelink bearer for the first terminal device based on the identity of the one or more first QoS flows and the first QoS parameter requirement of the one or more first QoS flows.

In some embodiments of this application, the third message further includes an identity of the second terminal device and/or an identity of the relay device.

In some embodiments of this application, the second message further includes the identity of the relay device and/or the identity of the second terminal device.

The first terminal device may first send the second message to the network device. The second message may further indicate the identity of the relay device, the second message may indicate the identity of the second terminal device, or the second message may indicate a mapping relationship between the relay device and the second terminal device. Alternatively, for example, the second message includes the identity of the relay device and/or the identity of the second terminal device. After receiving the second message, the network device parses the identity of the relay device and the identity of the second terminal device that are included in the second message, to determine that there is an association relationship between the relay device and the second terminal device. In this embodiment of this application, the second message carries the identity of the relay device and/or the identity of the second terminal device, so that the network device determines the relay device and the second terminal device that perform device-to-device communication with the first terminal device.

The first terminal device may first send the third message to the network device. The third message may further indicate the identity of the relay device, the third message may indicate the identity of the relay device, or the third message may indicate the mapping relationship between the relay device and the second terminal device. Alternatively, for example, the third message includes the identity of the relay device and/or the identity of the second terminal device. After receiving the third message, the network device parses the identity of the relay device and the identity of the second terminal device that are included in the third message, to determine that there is an association relationship between the relay device and the second terminal device. In this embodiment of this application, the second message carries the identity of the relay device and/or the identity of the second terminal device, so that the network device determines the relay device and the second terminal device that perform device-to-device communication with the first terminal device.

In some embodiments of this application, the second message and the third message may be a same message or different messages. For example, the third message may be independent of the second message, or the second message and the third message are simultaneously sent.

For example, the identity of the relay device may specifically include a relay UE L2 ID, and the identity of the second terminal device may specifically include a peer remote UE L2 ID. The remote UE further needs to report, to the base station, that there is an association relationship between the relay UE L2 ID and the peer remote UE L2 ID. In some embodiments of this application, the communication method performed by the network device further includes:

The network device determines that the network device supports the first terminal device in communicating with the second terminal device via the relay device.

The first message includes the first configuration information, and the first configuration information is used by the first terminal device to communicate with the second terminal device via the relay device.

In some embodiments of this application, the communication method performed by the network device further includes:
The network device determines the first configuration information based on the second message and the third message.

The network device sends the first configuration information.

In some embodiments of this application, in step 903, that the first terminal device determines the first configuration information of the first terminal device based on the first message includes:
The first terminal device determines, based on the first message, that the network device supports the first terminal device in communicating with the second terminal device via the relay device.

The first terminal device receives the first configuration information from the network device.

The first terminal device determines a configuration of a first bearer between the first terminal device and the relay device based on the first configuration information.

The first message may indicate the relay support capability of the network device. The first terminal device can obtain the relay support capability of the network device based on the first message. When supporting the first terminal device in communicating with the second terminal device via the relay device, the network device may generate the first configuration information. For example, the first configuration information may be carried in an RRC message. For example, the first configuration information may specifically include a sidelink bearer configuration or a relay dedicated configuration. The first terminal device obtains the first configuration information, and the first terminal device may then determine the configuration of the first bearer based on a configuration parameter included in the first configuration information. The first bearer includes a bearer between the first terminal device and the relay device. For example, the first bearer may be a PC5 RLC bearer. In this embodiment of this application, the first terminal device may configure the first bearer based on the indication of the network device, so that the first terminal device can communicate with the second terminal device via the relay device.

In some embodiments of this application, the first configuration information includes the configuration of the first bearer and a mapping relationship between a second bearer and the first bearer, where
the first bearer includes a bearer between the first terminal device and the relay device; and
the second bearer includes a bearer between the first terminal device and the second terminal device.

The second bearer is a bearer between the first terminal device and the second terminal device. To be specific, the second bearer is used for end-to-end communication between the first terminal device and the second terminal device. The second bearer may also be referred to as an end-to-end radio bearer (briefly referred to as a radio bearer below). Example descriptions are provided below. The base station provides a configuration of the second bearer for the remote UE based on a relationship between the remote UE and the relay UE and based on the end-to-end QoS information, namely, the foregoing third QoS flow information. The configuration of the second bearer includes end-to-end SDAP and PDCP configurations. The SDAP configuration includes a mapping relationship between the first QoS flow and the second bearer.

The network device supports the first terminal device in communicating with the second terminal device via the relay device. The network device may indicate the mapping relationship between the first bearer and the second bearer to the first terminal device. For example, the first configuration information sent by the network device includes: the configuration of the first bearer and the mapping relationship between the second bearer and the first bearer, so that the first terminal device can obtain the mapping relationship between the second bearer and the first bearer based on the first configuration information, and the first terminal device may configure the first bearer based on the indication of the network device, and determine that the first bearer is associated with the second bearer. In this way, the first terminal device can communicate with the second terminal device via the relay device.

Example descriptions are provided below. The base station determines an association relationship between the first QoS flow information and second QoS flow information based on the identity of the second terminal device and/or the identity of the relay device that are/is indicated in the second message and the third message, and determines a mapping relationship between the first QoS flow and the first bearer based on the mapping relationship between the first QoS flow and the second bearer. The base station ensures mapping, to a same first bearer, a first QoS flow that is mapped to a same second bearer, to ensure that one or more second bearers are mapped to one first bearer. Example descriptions are provided below. The base station provides, based on QoS information obtained through division between the remote UE and the relay UE, a U2U relay dedicated configuration that includes a mapping relationship between an end-to-end radio bearer SRB/DRB and a PC5 RLC bearer and configuration information of the PC5 RLC bearer. For example, the U2U relay dedicated configuration records that a data radio bearer (Data Radio Bearer, DRB) 1, a DRB 2, and the like may be configured.

Example descriptions are provided below. The base station provides, based on the QoS information obtained through division between the remote UE and the relay UE, the U2U relay dedicated configuration, including the mapping relationship between the end-to-end radio bearer and the PC5 RLC bearer, and the configuration information of the PC5 RLC bearer.

In some embodiments of this application, the first configuration information further includes the configuration of the first bearer and a correspondence between the first QoS flow and the first bearer, where the first QoS flow includes a QoS flow between the first terminal device and the second terminal device.

The network device supports the first terminal device in communicating with the second terminal device via the relay device, and the first configuration information sent by the network device includes the configuration of the first bearer and the correspondence between the first QoS flow and the first bearer. In this implementation scenario, the network device may notify the first terminal device of the correspondence between the first QoS flow and the first bearer, so that the first terminal device determines the correspondence between the first QoS flow and the first bearer via the first configuration information, and the first terminal device determines a correspondence between the first bearer and a second bearer with reference to other obtained configuration information.

In some embodiments of this application, the communication method performed by the network device further includes:
The network device sends second configuration information to the first terminal device, where the second configuration information includes a configuration of the second bearer and a correspondence between the first QoS flow and the second bearer, where the second bearer includes a bearer between the first terminal device and the second terminal device; and the first QoS flow includes a QoS flow between the first terminal device and the second terminal device.

In some embodiments of this application, the communication method performed by the first terminal device further includes the following steps:
The first terminal device receives the second configuration information from the network device, where the second configuration information includes the configuration of the second bearer and the correspondence between the first QoS flow and the second bearer, where the second bearer includes a bearer between the first terminal device and the second terminal device.

The first terminal device determines a correspondence between the first bearer and the second bearer based on the first configuration information and the second configuration information.

The second bearer is a bearer between the first terminal device and the second terminal device. The network device may send the configuration of the second bearer to the first terminal device. For example, the network device sends the second configuration information to the first terminal device, where the second configuration information includes the configuration of the second bearer and the correspondence between the first QoS flow and the second bearer. In this case, the first terminal device may determine the correspondence between the first QoS flow and the second bearer by parsing the second configuration information. Through parsing of the first configuration information by the first terminal device, it can be learned that the first terminal device determines a correspondence between the first QoS flow and the first bearer via the first configuration information, and the first terminal device determines the correspondence between the first bearer and the second bearer based on the correspondence between the first QoS flow and each of the first bearer and the second bearer. In this embodiment of this application, the first terminal device may autonomously determine the correspondence between the first bearer and the second bearer by processing the first configuration information and the second configuration information, and does not need to be notified by a network device side, so that the first terminal device can communicate with the second terminal device via the relay device.

In the foregoing embodiment, the network device can sense a relationship between the first terminal device, the relay device, and the second terminal device. In some other embodiments of this application, the network device may alternatively not sense a relationship between the first terminal device, the relay device, and the second terminal device, and the first terminal device completes configuration of a bearer when the network device does not sense the relationship.

Specifically, the communication method performed by the first terminal device further includes the following steps:
The first terminal device determines an identity of a second QoS flow between the first terminal device and the relay device and a second QoS parameter requirement corresponding to the second QoS flow, where the second QoS flow corresponds to one or more first QoS flows, and the first QoS flow includes a QoS flow between the first terminal device and the second terminal device.

The first terminal device sends second QoS flow information to the network device, where the second QoS flow information includes the identity of the second QoS flow and the second QoS parameter requirement corresponding to the second QoS flow.

The second QoS parameter requirement is a QoS parameter requirement of the second QoS flow between the first terminal device and the relay device.

The first terminal device may send the second QoS flow information to the network device by using the first bearer as a whole. For example, the first terminal device determines a second QoS flow, where the second QoS flow corresponds to one or more first QoS flows, and the one or more first QoS flows correspond to a second bearer between the first terminal device and the second terminal device. That is, the first terminal device enables a first QoS flow corresponding to a second bearer as a whole to correspond to a second QoS flow. The first terminal device may further determine a second QoS parameter requirement corresponding to the second QoS flow. A specific manner of configuring the second QoS parameter requirement is not limited. In another possible implementation, the second QoS flow corresponds to one or more first QoS flows, and the one or more first QoS flows correspond to a plurality of second bearers between the first terminal device and the second terminal device. That is, the first terminal device enables a first QoS flow corresponding to a plurality of second bearers as a whole to correspond to a second QoS flow. The first terminal device may further determine a second QoS parameter requirement corresponding to the second QoS flow. A specific manner of configuring the second QoS parameter requirement is not limited.

After determining the second QoS flow information, the first terminal device sends the second QoS flow information to the network device. After receiving the second QoS flow information, the network device may determine an identity of the second QoS flow and a second QoS parameter requirement corresponding to the second QoS flow, so that the network device may configure a sidelink bearer based on the second QoS flow. In this implementation, the network device does not need to sense a relationship between the first terminal device, the relay device, and the second terminal device, and configures a sidelink bearer based on the second QoS flow.

Further, in some embodiments of this application, that the first terminal device determines the second QoS parameter requirement corresponding to the second QoS flow includes:

The first terminal device determines, based on a first QoS parameter requirement of the one or more first QoS flows corresponding to the second QoS flow, the second QoS parameter requirement corresponding to the second QoS flow, where
the first QoS parameter requirement is a QoS parameter requirement of the first QoS flow between the first terminal device and the relay device; and
the second QoS parameter requirement is a QoS parameter requirement of the first QoS flow between the first terminal device and the second terminal.

The first terminal device may determine the second QoS parameter requirement corresponding to the second QoS flow, for example, determine, based on the first QoS parameter requirement of the one or more first QoS flows corresponding to the second QoS flow, the second QoS parameter requirement corresponding to the second QoS flow, and select the first QoS parameter requirement to generate the second QoS parameter requirement. Example descriptions are provided below. When generating the second QoS parameter requirement, the first terminal device may select the first QoS parameter requirement based on at least one of the following requirements: selecting a QoS parameter requirement of a first QoS flow with a highest priority as the second QoS parameter requirement, selecting a QoS parameter requirement of a first QoS flow with a minimum packet delay budget (Packet Delay Budget, PDB) as the second QoS parameter requirement, selecting a QoS parameter requirement of a first QoS flow with a highest guaranteed flow bit rate (Guaranteed Flow Bit Rate, GFBR) requirement as the second QoS parameter requirement, selecting a QoS parameter requirement of a first QoS flow with a lowest packet error rate (Packet Error Rate, PER) requirement as the second QoS parameter requirement, or selecting, as the second QoS parameter requirement, a highest QoS parameter from each item of requirements (for example, a PDB, a GFBR, and a PER) in a plurality of sets of QoS parameter information corresponding to a plurality of first QoS flows. A manner of selecting the second QoS parameter requirement is not limited in this embodiment of this application.

In some embodiments of this application, the second QoS flow corresponds to one or more second bearers, and the second bearer includes a bearer between the first terminal device and the second terminal device.

One or more second bearers are configured between the first terminal device and the second terminal device. The first terminal device determines that the second QoS flow corresponds to the one or more second bearers between the first terminal device and the second terminal device, and based on the correspondence between the second QoS flow and the one or more second bearers, the network device can configure a sidelink bearer for the first terminal device based on the second QoS flow.

In some embodiments of this application, the first configuration information further includes a configuration of a first bearer and a correspondence between the second QoS flow and the first bearer, and the first bearer includes a bearer between the first terminal device and the relay device.

The network device supports the first terminal device in communicating with the second terminal device via the relay device, and the first configuration information sent by the network device includes the configuration of the first bearer and the correspondence between the second QoS flow and the first bearer. In this implementation scenario, the network device may notify the first terminal device of the correspondence between the second QoS flow and the first bearer, so that the first terminal device determines the correspondence between the second QoS flow and the first bearer via the first configuration information, and the first terminal device determines a correspondence between the first bearer and a second bearer with reference to other obtained configuration information. For example, the first terminal device determines the correspondence between the first bearer and the second bearer with reference to the correspondence that is between the first QoS flow and the second bearer and that is sent by the network device. Because the first terminal device further maintains the correspondence between the first QoS flow and the second QoS flow, the first terminal device may finally determine the correspondence between the first bearer and the second bearer based on the correspondence between the second QoS flow and the first bearer (for example, the foregoing second configuration information) and the correspondence between the first QoS flow and the second bearer.

In some embodiments of this application, the communication method performed by the first terminal device further includes the following steps:
receiving second configuration information from the network device, where the second configuration information includes a configuration of the second bearer and a correspondence between the first QoS flow and the second bearer, where the second bearer includes a bearer between the first terminal device and the second terminal device; and
determining a correspondence between the first bearer and the second bearer based on the first configuration information and the second configuration information.

The second bearer is a bearer between the first terminal device and the second terminal device. The network device may send the configuration of the second bearer to the first terminal device. For example, the network device sends the second configuration information to the first terminal device, where the second configuration information includes the configuration of the second bearer and the correspondence between the first QoS flow and the second bearer. In this case, the first terminal device may determine the correspondence between the first QoS flow and the second bearer by parsing the second configuration information. With reference to parsing of first configuration information by the first terminal device, it can be learned that the first terminal device determines the correspondence between the first QoS flow and the first bearer via the first configuration information, and the first terminal device determines a correspondence between the first bearer and the second bearer based on the correspondence between the first QoS flow and each of the first bearer and the second bearer. In this embodiment of this application, the first terminal device may autonomously determine the correspondence between the first bearer and the second bearer by processing the first configuration information and the second configuration information, and does not need to be notified by a network device side, so that the first terminal device can communicate with the second terminal device via the relay device.

In some embodiments of this application, the communication method performed by the network device further includes:
The network device receives a first request from the first terminal device, where the first request is used to request the network device to allocate a relay transmission resource.

The network device configures the relay transmission resource for the first terminal device based on the first request.

In some embodiments of this application, the communication method performed by the first terminal device further includes the following steps:
The first terminal device sends a first request to the network device, where the first request is used to request the network device to allocate a relay transmission resource.

After the first terminal device determines the configuration of the first bearer and the correspondence between the first bearer and the second bearer, when the first terminal device needs to communicate with the second terminal device via the relay device, the first terminal device further needs to obtain a relay transmission resource. In this embodiment of this application, the first terminal device may generate a first request, and send the first request to the network device, where the first request may include relay transmission resource indication information, so that the network device receives the first request, and the network device may allocate the relay transmission resource to the first terminal device based on the first request. The relay transmission resource may be referred to as a U2U relay transmission resource.

For example, the first request sent by the first terminal device includes the identity of the relay device, and the network device parses the first request to obtain the identity of the relay device, to allocate, to the first terminal device, the relay transmission resource used to communicate with the relay device. Optionally, the identity of the relay device is a U2U relay dedicated identity.

Example descriptions are provided below. The base station does not sense that the remote UE performs U2U relay. Therefore, if the remote UE operates in a mode 1 and the base station is needed to allocate a U2U relay transmission resource, the remote UE needs to request the base station to allocate the resource.

In the foregoing embodiment, a process of the interaction between the first terminal device and the network device when the first terminal device is in the connected state is described. The following describes a process of configuring a sidelink bearer when the first terminal device is in an idle state. Specifically, in some embodiments of this application, in step 903, the determining the first configuration information of the first terminal device based on the first message includes:
The first terminal device determines, based on the first message, that the network device supports the first terminal device in communicating with the second terminal device via the relay device.

The first terminal device obtains third configuration information from the first message, where the third configuration information is used for communication between terminal devices.

The first terminal device determines the first configuration information based on the third configuration information.

The first message may indicate the relay support capability of the network device, and the first terminal device can obtain the relay support capability of the network device based on the first message. Example descriptions are provided below. The remote UE may obtain, from a SIB message of the base station, the indication information indicating that the base station supports the U2U relay. When supporting the first terminal device in communicating with the second terminal device via the relay device, the network device may generate third configuration information. The third configuration information may be carried in the first message. For example, the third configuration information may specifically include a sidelink bearer configuration. The first terminal device obtains the third configuration information, and the first terminal device may then determine a configuration of a first bearer based on the configuration parameter included in the third configuration information. The first bearer includes a bearer between the first terminal device and the relay device. For example, the first bearer may be a PC5 RLC bearer. In this embodiment of this application, the first terminal device may configure the first bearer based on the indication of the network device, so that the first terminal device can communicate with the second terminal device via the relay device.

In some embodiments of this application, that the first terminal device determines the first configuration information based on the third configuration information includes:
The first terminal device determines second configuration information from the third configuration information based on a third QoS parameter requirement corresponding to a first QoS flow, where the third QoS parameter requirement is an end-to-end QoS parameter requirement of the first QoS flow, the second configuration information includes a configuration of a second bearer and a mapping relationship between the first QoS flow and the second bearer, the second bearer includes a bearer between the first terminal device and the second terminal device, and the first QoS flow includes a QoS flow between the first terminal device and the second terminal device.

The first QoS flow includes a QoS flow between the first terminal device and the second terminal device. The first terminal device determines that the third QoS parameter requirement is an end-to-end QoS parameter requirement of the first QoS flow. The third configuration information sent by the network device may include a plurality of sidelink bearer configurations, and the first terminal device selects a sidelink bearer configuration from the third configuration information as second configuration information based on the third QoS parameter requirement corresponding to the first QoS flow. The second configuration information includes a mapping relationship between the first QoS flow and a second bearer.

Example descriptions are provided below. The remote UE may determine a sidelink bearer configuration based on the end-to-end third QoS parameter requirement and the plurality of sidelink bearer configurations sent by the base station, and determine an SDAP configuration and a PDCP configuration based on the sidelink bearer configuration.

Further, in some embodiments of this application, that the first terminal device determines the first configuration information based on the third configuration information further includes:
The first terminal device determines the first configuration information based on the first QoS parameter requirement of the first QoS flow and the third configuration information, where the first configuration information includes a configuration of a first bearer between the first terminal device and the relay device. The first terminal device determines the first configuration information based on the third configuration information and the mapping relationship between the first QoS flow and the second bearer, where the first configuration information includes a configuration of a first bearer between the first terminal device and the relay device.

The second bearer is a bearer between the first terminal device and the second terminal device. The first terminal device determines the first configuration information based on a plurality of sidelink bearer configurations included in the third configuration information sent by the network device and the mapping relationship between the first QoS flow and the second bearer. The first configuration information includes a configuration of a first bearer corresponding to the first QoS flow, and the first terminal device may determine the configuration of the first bearer based on the configuration parameter included in the first configuration information. The first bearer includes a bearer between the first terminal device and the relay device. For example, the first bearer may be a PC5 RLC bearer. In this embodiment of this application, the first terminal device may configure the first bearer based on the indication of the network device, so that the first terminal device can communicate with the second terminal device via the relay device.

In some embodiments of this application, the communication method performed by the network device further includes:

The network device receives a second request from the first terminal device, where the second request is used to request the network device to send the third configuration information and/or the relay transmission resource.

The network device sends the third configuration information to the first terminal device based on the second request, and/or configures the relay transmission resource for the first terminal device based on the second request.

In some embodiments of this application, the communication method performed by the first terminal device further includes the following steps:

When the first message includes the first indication information, and the first message does not include third configuration information and/or a relay transmission resource, the first terminal device determines that the network device does not support the first terminal device in communicating with the second terminal device via the relay device, where the third configuration information is used for communication between terminal devices;
or
when the first message includes the first indication information, and the first message does not include third configuration information and/or a relay transmission resource, the first terminal device sends a second request to the network device, where the second request is used to request the network device to send the third configuration information and/or the relay transmission resource.

When the first terminal device determines that the network device does not support the first terminal device in communicating with the second terminal device via the relay device, it is considered that the first terminal device cannot perform the relay configuration procedure.

When the first terminal device is in the idle state, in addition to determining the first indication information in the first message, the first terminal device further needs to determine whether the first message includes third configuration information and/or a relay transmission resource. For example, when the first message does not include the third configuration information, the first terminal device determines that the network device does not support the first terminal device in communicating with the second terminal device via the relay device. For example, when the first message does not include the relay transmission resource, the first terminal device determines that the network device does not support the first terminal device in communicating with the second terminal device via the relay device. For example, when the first message does not include the third configuration information and the relay transmission resource, the first terminal device determines that the network device does not support the first terminal device in communicating with the second terminal device via the relay device. The first terminal device can determine, based on the message content carried in the first message, whether the network device supports the first terminal device in communicating with the second terminal device via the relay device, so that the first terminal device can communicate with the second terminal device via the relay device with the support of the network device.

In some other embodiments, when the first message includes the first indication information, and the first message does not include third configuration information and/or a relay transmission resource, because the first terminal device is in the idle state in this case, the first terminal device does not directly determine whether the network device supports the first terminal device in communicating with the second terminal device via the relay device, but the first terminal device switches to the connected state, and the first terminal device sends a second request to the network device. For example, the second request message includes an identity of the relay terminal. To request the network device to send the third configuration information and/or the relay transmission resource. After receiving the third configuration information and the relay transmission resource that are/is sent by the network device, the first terminal device may determine that the network device supports the first terminal device in communicating with the second terminal device via the relay device.

In some embodiments of this application, the first message includes second indication information, where the second indication information indicates that the network device does not support the first terminal device in communicating with the second terminal device via the relay device.

When the network device does not support the first terminal device in communicating with the second terminal device via the relay device, the network device may generate second indication information. When obtaining the second indication information from the first message, the first terminal device may determine that the network device does not support the first terminal device in communicating with the second terminal device via the relay device. Therefore, the first terminal device no longer configures a sidelink bearer.

In some embodiments of this application, the first message does not include first indication information, which indicates that the network device does not support the first terminal device in communicating with the second terminal device via the relay device, where
the first indication information indicates that the network device supports the first terminal device in communicating with the second terminal device via the relay device.

The network device may alternatively use an implicit indication manner. When supporting the first terminal device in communicating with the second terminal device via the relay device, the network device may generate first indication information, and include the first indication information in the first message. When the network device does not support the first terminal device in communicating with the second terminal device via the relay device, the network device may not generate first indication information, and the first terminal device may determine, based on a case in which the first message does not include the first indication information, that the network device does not support the first terminal device in communicating with the second terminal device via the relay device. Therefore, the first terminal device no longer configures a sidelink bearer.

In some embodiments of this application, the communication method performed by the network device further includes:
The network device sends fourth configuration information to the first terminal device, where the fourth configuration information includes one or more thresholds.

Correspondingly, the first terminal device receives the fourth configuration information from the network device, and determines, via the fourth configuration information, the one or more thresholds indicated by the network device.

The network device may notify the first terminal device of the one or more thresholds in an explicit indication manner, so that the first terminal device can receive the one or more thresholds from the network device.

In this embodiment of this application, the one or more thresholds determined by the network device may be used by the first terminal device to determine whether to select a relay device, reselect a relay device, or execute a discovery procedure.

Specifically, the one or more thresholds may be used by the first terminal device to trigger the selection of the relay device, used by the first terminal device to trigger the reselection of the relay device, or used by the first terminal device to trigger the execution of the discovery procedure when signal quality of a link between the first terminal device and the second terminal device is less than or equal to the threshold. Alternatively, the one or more thresholds may be used by the first terminal device to trigger the selection of the relay device, used by the first terminal device to trigger the reselection of the relay device, or used by the first terminal device to trigger the execution of the discovery procedure when signal quality of a link between the first terminal device and the relay device is less than or equal to the threshold.

In some embodiments of this application, the communication method performed by the network device further includes:

The network device determines that the network device supports the first terminal device in communicating with the second terminal device via the relay device.

The first message includes first indication information, and the first indication information further indicates one or more thresholds.

In some embodiments of this application, the communication method performed by the first terminal device further includes the following steps:

When the first message includes the first indication information, the first terminal device determines that the network device supports the first terminal device in communicating with the second terminal device via the relay device, where
the first indication information further indicates one or more thresholds.

Specifically, the network device may determine that the first indication information is used for the one or more thresholds, so that the first message may indicate the one or more thresholds. When obtaining the one or more thresholds from the first message, the first terminal device determines that the network device supports the first terminal device in communicating with the second terminal device via the relay device. The network device may implicitly indicate, depending on whether the threshold is carried, whether the network device supports the first terminal device in communicating with the second terminal device via the relay device.

In some embodiments of this application, the communication method performed by the first terminal device further includes the following step: The one or more thresholds include a first threshold. For example, the first threshold is a threshold 1.

When signal quality of a link between the first terminal device and the second terminal device is less than or equal to the first threshold, the first terminal device triggers selection of a relay device, triggers reselection of a relay device, or executes a discovery procedure.

Example descriptions are provided below. When one threshold is used, when signal quality of an SL link between the remote UE and a peer remote UE is less than or equal to the threshold 1 (that is, a threshold condition is met), execution of the discovery procedure is triggered, and a relay UE is selected based on a result of the discovery procedure; or when the U2U relay has been established, and the signal quality of the SL link between the remote UE and a current relay UE is less than or equal to the threshold 1 (that is, a threshold condition is met), execution of the discovery procedure is triggered, and a relay UE is reselected.

In some embodiments of this application, the communication method performed by the first terminal device further includes the following step: The one or more thresholds include a first threshold and a second threshold. For example, the first threshold and the second threshold are respectively a threshold 1 and a threshold 2.

When signal quality of a link between the first terminal device and the second terminal device is less than or equal to the first threshold, the first terminal device triggers selection of a relay device or executes a discovery procedure;
or
when signal quality of a link between the first terminal device and the relay device is less than or equal to the second threshold, the first terminal device triggers reselection of a relay device or executes a discovery procedure.

Example descriptions are provided below. When two different thresholds are used, when signal quality of an SL link between a remote UE and a target UE is less than or equal to the threshold 1, execution of a discovery procedure is triggered, and a relay UE is selected based on a result of the discovery procedure; or when the U2U relay has been established, and the signal quality of the SL link between the remote UE and a current relay UE is less than or equal to the threshold 2, execution of the discovery procedure is triggered, and a relay UE is reselected.

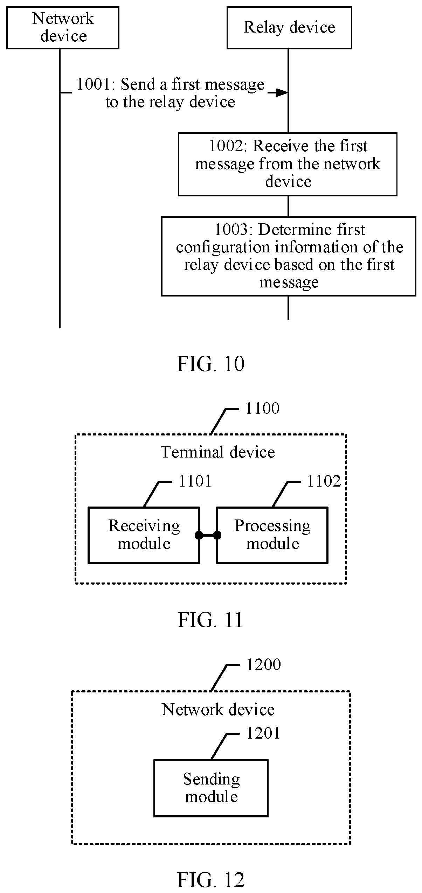

An embodiment of this application provides a communication method, which is applicable to an end-to-end relay scenario. FIG. 10 is a schematic flowchart of interaction between a network device and a relay device according to an embodiment of this application. The relay device may be the foregoing relay UE. The communication method provided in this embodiment of this application mainly includes the following steps:
1001: The network device sends a first message to the relay device, where the first message indicates a relay support capability of the network device.

The network device determines whether to support a terminal device in performing communication via the relay device. The communication herein may also be referred to as device-to-device communication. The network device determines the relay support capability of the network device. The relay support capability may include that the network device supports a first terminal device in performing communication via the relay device, or the network device does not support the terminal device in performing communication via the relay device.

After the network device determines the relay support capability of the network device, the network device generates the first message. The first message may be specifically a system message, or the first message is a message of another type. This is not limited herein.

It may be understood that, in this embodiment of this application, the network device may determine, based on the capability of the network device, whether the network device supports the terminal device in performing communication via the relay device. For example, the network device indicates, in the system message, that a U2U relay is supported.

1002: The relay device receives the first message from the network device, where the first message indicates the relay support capability of the network device.

In this embodiment of this application, the relay device is a relay terminal device, and the relay device may communicate with the network device. For example, the relay device is in a connected state, and the relay device receives the first message from the network device. After receiving the first message, the relay device may parse the first message, and determine the relay support capability of the network device based on the indication of the first message.

1003: The relay device determines first configuration information of the relay device based on the first message, where the first configuration information is used by the first terminal device to communicate with a second terminal device via the relay device.

The relay device receives the first message, and obtains the relay support capability of the network device by parsing the first message. When determining that a network supports a relay, the relay device obtains the first configuration information. In this embodiment of this application, the first configuration information may be used by the relay device to support the first terminal device in communicating with the second terminal device via the relay device. There are a plurality of implementations of the first configuration information, and the first configuration information includes a plurality of types of content. For details, refer to subsequent example descriptions in this embodiment of this application.

In some embodiments of this application, the first message includes first indication information, where the first indication information indicates that the network device supports the first terminal device in communicating with the second terminal device via the relay device.

The network device may notify the relay device in an explicit indication manner. To be specific, the first message generated by the network device includes the first indication information. After the first terminal device obtains the first indication information from the first message, the relay device determines, based on the first indication information, that the network device supports the terminal device in communicating with the terminal device via the relay device. A specific implementation of the first indication information is not limited in embodiments of this application. For example, the first indication information may be an indication field in a system message, and the first terminal device may obtain the first indication information by parsing the indication field.

The following describes an implementation of the first indication information in the first message. For example, the first message is a system message. The system message may include a SIB12, and the SIB12 is a system message block indicating a sidelink communication-related configuration.

In some embodiments of this application, the communication method performed by the relay device includes:
The relay device determines first quality of service QoS flow information between the relay device and the second terminal device.

The relay device sends a second message to the network device, where the second message includes the first QoS flow information, the first QoS flow information includes an identity of one or more first QoS flows and a first QoS parameter requirement of the one or more first QoS flows, and the first QoS parameter requirement is a QoS parameter requirement between the relay device and the second terminal device, where
the first QoS flow includes a QoS flow between the first terminal device and the second terminal device.

Correspondingly, in some embodiments of this application, the communication method performed by the network device further includes:

The network device receives a second message from the relay device, where the second message includes first quality of service QoS flow information, the first QoS flow information includes an identity of one or more first QoS flows and a first QoS parameter requirement of the one or more first QoS flows, and the first QoS parameter requirement is a QoS parameter requirement between the relay device and the second terminal device, where
the first QoS flow includes a QoS flow between the first terminal device and the second terminal device.

Specifically, the relay device receives a third QoS parameter requirement of one or more first QoS flows that are sent by the first terminal device, and the relay device determines the first QoS parameter requirement between the relay device and the second terminal device based on the second QoS parameter requirement of the one or more first QoS flows. The third QoS parameter requirement is a QoS parameter requirement of the first QoS flow between the first terminal device and the second terminal device. The relay device generates a second message, where the second message includes first QoS flow information. The relay device sends the second message to the network device. For example, the second message is specifically an RRC message.

The network device may receive the second message, and determine first QoS flow information by parsing the second message. The network device obtains an identity of one or more first QoS flows and a first QoS parameter requirement of the one or more first QoS flows based on the first QoS flow information, the network device may configure a sidelink bearer for the relay device based on the identity of the one or more first QoS flows and the first QoS parameter requirement of the one or more first QoS flows.

Further, in some embodiments of this application, the communication method performed by the relay device includes:

The relay device sends a first mapping relationship to the network device, where the first mapping relationship indicates a first correspondence, and the first correspondence indicates that one or more first QoS flows are configured on a first bearer, or indicates a correspondence between the first QoS flow and a second bearer, where
the first QoS flow includes a QoS flow between the first terminal device and the second terminal device;
the first bearer includes a bearer between the relay device and the second terminal device; and
the second bearer includes a bearer between the first terminal device and the second terminal device.

The correspondence between the first QoS flow and the second bearer may be understood as that the correspondence indicates that the one or more first QoS flows are configured on a second bearer.

Correspondingly, in some embodiments of this application, the communication method performed by the network device further includes:

The network device receives a first mapping relationship from the relay device, where the first mapping relationship indicates a first correspondence, and the first correspondence indicates that one or more first QoS flows are configured on a first bearer, or indicates a correspondence between the first QoS flow and a second bearer, where
the first QoS flow includes a QoS flow between the first terminal device and the second terminal device;
the first bearer includes a bearer between the relay device and the second terminal device; and
the second bearer includes a bearer between the first terminal device and the second terminal device.

Specifically, the relay device determines that one or more first QoS flows correspond to a first bearer or the first QoS flow corresponds to a second bearer, the relay generates a first mapping relationship, and indicates a first correspondence based on the first mapping relationship, and the relay device sends the first mapping relationship to the network device, so that the network device determines a correspondence between the one or more first QoS flows and the first bearer and the correspondence between the one or more first QoS flows and the second bearer by parsing the first mapping relationship. The network device may allocate a sidelink bearer configuration to the relay device based on the first mapping relationship.

In some embodiments of this application, the communication method performed by the network device further includes:

The network device determines first configuration information based on the first message and the second message.

The network device sends the first configuration information, where
the first configuration information includes a configuration of the first bearer and a mapping relationship between a second bearer and the first bearer, where
the first bearer includes a bearer between the first terminal device and the relay device; and
the second bearer includes a bearer between the first terminal device and the second terminal device.

In some embodiments of this application, that the relay device determines the first configuration information of the relay device based on the first message includes:

The relay device determines, based on the first message, that the network device supports the first terminal device in communicating with the second terminal device via the relay device.

The relay device receives the first configuration information from the network device.

The relay device determines a configuration of the first bearer between the relay device and the second terminal device based on the first configuration information.

The first message may indicate the relay support capability of the network device. The relay device can obtain the relay support capability of the network device based on the first message. When the network device supports the first terminal device in communicating with the second terminal device via the relay device, the network device may generate first configuration information, where the first configuration information is carried in a configuration message, for example, the configuration information may be an RRC message; and the relay device parses the first configuration information in the configuration message, to determine a configuration of the first bearer between the relay device and the second terminal device, so that the communication between the first terminal device and the second terminal device can be implemented via the relay device.

In some embodiments of this application, the first configuration information includes a configuration of the first bearer and a mapping relationship between the first bearer and a second bearer.

The second bearer is a bearer between the first terminal device and the second terminal device. To be specific, the second bearer is used for end-to-end communication between the first terminal device and the second terminal device. The second bearer may also be referred to as an end-to-end radio bearer (briefly referred to as a radio bearer below). Example descriptions are provided below. A base station provides a configuration of the second bearer for a remote UE based on a relationship between the remote UE and the relay UE and end-to-end QoS information. A bearer of the second bearer is end-to-end SDAP and PDCP configurations. When supporting the first terminal device in communicating with the second terminal device via the relay device, the network device may indicate the mapping relationship between the first bearer and the second bearer to the relay device.

In some embodiments of this application, the first configuration information includes a configuration of the first bearer and a correspondence between the first QoS flow and the first bearer.

The network device supports the first terminal device in communicating with the second terminal device via the relay device, and the first configuration information sent by the network device includes the configuration of the first bearer and the correspondence between the first QoS flow and the first bearer. In this implementation scenario, the network device may notify the relay device of the correspondence between the first QoS flow and the first bearer, so that the relay device determines the correspondence between the first QoS flow and the first bearer via the first configuration information, and the relay device determines a correspondence between the first bearer and a second bearer with reference to other obtained configuration information. For example, the relay device determines the correspondence between the first QoS flow and the first bearer and the correspondence between the first QoS flow and the second bearer based on the first configuration information, and determines the correspondence between the first bearer and the second bearer. The first QoS flow and the second bearer may be obtained from a first terminal device side.

In some embodiments of this application, the communication method performed by the relay device further includes:
The relay device determines an identity of a second QoS flow between the relay device and a second terminal device and a second QoS parameter requirement corresponding to the second QoS flow, where the second QoS flow corresponds to one or more first QoS flows, and the first QoS flow includes a QoS flow between the first terminal device and the second terminal device.

The relay device sends second QoS flow information to the network device, where the second QoS flow information includes the identity of the second QoS flow and the second QoS parameter requirement corresponding to the second QoS flow.

Correspondingly, in some embodiments of this application, the communication method performed by the network device further includes:

The network device receives the second QoS flow information from the relay device, where the second QoS flow information includes the second QoS flow and the second QoS parameter requirement corresponding to the second QoS flow; and
the second QoS parameter requirement is a QoS parameter requirement of the second QoS flow between the relay device and the second terminal.

The relay device may send the second QoS flow information to the network device by using the first bearer as a whole. For example, the relay device determines a second QoS flow, where the second QoS flow corresponds to one or more first QoS flows, and the one or more first QoS flows correspond to a first bearer between the relay device and the second terminal device. That is, the relay device enables a first bearer as a whole to correspond to a second QoS flow. The relay device may further determine a second QoS parameter requirement corresponding to the second QoS flow. A specific manner of configuring the second QoS parameter requirement is not limited.

The relay device may send the second QoS flow information to the network device by using the second bearer as a whole. For example, the relay device determines a second QoS flow, where the second QoS flow corresponds to one or more first QoS flows, and the one or more first QoS flows correspond to a second bearer between the first terminal device and the second terminal device. That is, the relay device considers one or more first QoS flows corresponding to a second bearer as a whole as a second QoS flow. The relay device may further determine a second QoS parameter requirement corresponding to the second QoS flow. A specific manner of configuring the second QoS parameter requirement is not limited.

After determining the second QoS flow information, the relay device sends the second QoS flow information to the network device. After receiving the second QoS flow information, the network device may determine an identity of the second QoS flow and a second QoS parameter requirement corresponding to the second QoS flow, so that the network device may configure a sidelink bearer based on the second QoS flow. In this implementation, the network device does not need to sense a relationship between the first terminal device, the relay device, and the second terminal device, and configures a sidelink bearer based on the second QoS flow.

In some embodiments of this application, that the relay device determines the second QoS parameter requirement corresponding to the second QoS flow includes:

The relay device determines, based on a first QoS parameter requirement of the one or more first QoS flows corresponding to the second QoS flow, the second QoS parameter requirement corresponding to the second QoS flow, where
the first QoS parameter requirement is a QoS parameter requirement of the first QoS flow between the relay device and the first terminal device; and
the second QoS parameter requirement is a QoS parameter requirement of the second QoS flow between the relay device and the first terminal device.

The relay device may determine the second QoS parameter requirement corresponding to the second QoS flow, for example, determine, based on the first QoS parameter requirement of the one or more first QoS flows corresponding to the second QoS flow, the second QoS parameter requirement corresponding to the second QoS flow, and select the first QoS parameter requirement to generate the second QoS parameter requirement. Example descriptions are provided below. When generating the second QoS parameter requirement, the relay device may select the first QoS parameter requirement based on at least one of the following requirements: selecting a first QoS parameter requirement of a first QoS flow with a highest priority as the second QoS parameter requirement, selecting a first QoS parameter requirement of a first QoS flow with a minimum packet delay budget (PacketDelay Budget, PDB) as the second QoS parameter requirement, selecting a first QoS parameter requirement of a first QoS flow with a highest guaranteed flow bit rate (Guaranteed Flow Bit Rate, GFBR) requirement as the second QoS parameter requirement, selecting a first QoS parameter requirement of a first QoS flow with a lowest packet error rate (Packet Error Rate, PER) requirement as the second QoS parameter requirement, or selecting, as the second QoS parameter requirement, a highest QoS parameter from each item of requirements in a plurality of sets of QoS parameter information corresponding to a plurality of first QoS flows. A manner of selecting the second QoS parameter requirement is not limited in this embodiment of this application.

In some embodiments of this application, the second QoS flow may further correspond to a plurality of second bearers, and the second bearer includes a bearer between the first terminal device and the second terminal device. That is, the relay device may send the second QoS flow information to the network device by using the plurality of second bearers as a whole. For example, the relay device determines a second QoS flow, where the second QoS flow corresponds to one or more first QoS flows, and the one or more first QoS flows correspond to a plurality of second bearers between the first terminal device and the second terminal device. That is, the relay device entirely considers one or more first QoS flows corresponding to a plurality of second bearers as a second QoS flow. The relay device may further determine a second QoS parameter requirement corresponding to the second QoS flow. For a manner of determining the second QoS parameter requirement, refer to the foregoing embodiment.

One or more second bearers are configured between the first terminal device and the second terminal device. The relay device determines that the second QoS flow corresponds to the one or more second bearers between the first terminal device and the second terminal device, and based on the correspondence between the second QoS flow and the one or more second bearers, the network device can configure a sidelink bearer for the first terminal device based on the second QoS flow information.

In some embodiments of this application, the first configuration information further includes a configuration of a first bearer and a correspondence between the second QoS flow and the first bearer, and the first bearer includes a bearer between the relay device and the second terminal device.

The network device supports the first terminal device in communicating with the second terminal device via the relay device, and the first configuration information sent by the network device to the relay device includes a configuration of a first bearer and a correspondence between the second QoS flow and the first bearer. In this implementation scenario, the relay device receives a correspondence that is between a first QoS flow and the second bearer and that is notified by the first terminal device, and with reference to the correspondence between the second QoS flow and the first bearer, the correspondence between the first QoS flow and the second bearer, and a correspondence between the first QoS flow and the second QoS flow, the relay device can determine a correspondence between the first bearer and the second bearer.

In some embodiments of this application, the communication method performed by the relay device further includes:
The relay device receives a first correspondence from the first terminal device, where the first correspondence includes a correspondence between the first QoS flow and the second bearer.

In the foregoing embodiment, a process of the interaction between the relay device and the network device when the relay device is in the connected state is described. The following describes a process of configuring a sidelink bearer when the relay device is in an idle state. Specifically, in some embodiments of this application, that the relay device determines the first configuration information of the relay device based on the first message includes:
The relay device determines, based on the first message, that the network device supports the first terminal device in communicating with the second terminal device via the relay device.

The relay device obtains third configuration information from the first message, where the third configuration information is used for communication between terminal devices.

The relay device determines the first configuration information based on the third configuration information, where the first configuration information includes a correspondence between the first QoS flow and a first bearer; and/or a correspondence between the first bearer and a second bearer.

The first message may indicate the relay support capability of the network device, and the relay device can obtain the relay support capability of the network device based on the first message. Example descriptions are provided below. The relay UE may obtain, from a SIB message of the base station, the indication information indicating that the base station supports the U2U relay. When supporting the first terminal device in communicating with the second terminal device via the relay device, the network device may generate third configuration information. The third configuration information may be carried in the first message. For example, the third configuration information may be specifically a sidelink bearer configuration. The relay device obtains the third configuration information, and the relay device may then determine a configuration of a first bearer based on the configuration parameter included in the third configuration information. The first bearer includes a bearer between the relay device and the second terminal device. For example, the first bearer may be a PC5 RLC bearer. In this embodiment of this application, the relay device may configure the first bearer based on the indication of the network device, so that the communication between the first terminal device and the second terminal device can be implemented via the relay device.

In some embodiments of this application, that the relay device may further determine the correspondence between the first bearer and the second bearer based on the third configuration information includes:
The relay device determines a correspondence between the first QoS flow and the first bearer based on the correspondence between the first QoS and the second bearer and the third configuration information; and determines the correspondence between the first bearer and the second bearer based on the correspondence between the first QoS and the second bearer and the correspondence between the first QoS and the first bearer.

In some embodiments of this application, that the relay device determines the first configuration information based on the third configuration information further includes:
The relay device determines the first configuration information based on the third configuration information and the mapping relationship between the first QoS flow and the second bearer, where the first configuration information includes a configuration of a first bearer between the relay device and the first terminal device.

The second bearer is a bearer between the first terminal device and the second terminal device. The relay device determines the first configuration information based on a plurality of sidelink bearer configurations included in the third configuration information sent by the network device and the mapping relationship between the first QoS flow and the second bearer. The first configuration information includes a configuration of a first bearer corresponding to the first QoS flow, and the relay device may determine the configuration of the first bearer based on the configuration parameter included in the first configuration information. The first bearer includes a bearer between the first terminal device and the relay device. For example, the first bearer may be a PC5 RLC bearer. In this embodiment of this application, the relay device may configure the first bearer based on the indication of the network device, so that the communication between the first terminal device and the second terminal device can be implemented via the relay device.

In some embodiments of this application, the communication method performed by the relay device further includes:
When the first message includes first indication information, and the first message does not include third configuration information and/or a relay transmission resource, the relay device determines that the network device does not support the first terminal device in communicating with the second terminal device via the relay device, where the third configuration information is used for communication between terminal devices, and the first indication information indicates that the network device supports the first terminal device in communicating with the second terminal device via the relay device;
or
when the first message includes first indication information, and the first message does not include third configuration information and/or a relay transmission resource, the relay device sends a second request to the network device, where the second request is used to request the network device to send the third configuration information and/or the relay transmission resource, and the first indication information indicates that the network device supports the first terminal device in communicating with the second terminal device via the relay device.

Correspondingly, in some embodiments of this application, the communication method performed by the network device further includes:
The network device receives a second request from the first terminal device, where the second request is used to request the network device to send the third configuration information and/or the relay transmission resource.

The network device sends the third configuration information to the first terminal device based on the second request, and/or configures the relay transmission resource for the first terminal device based on the second request.

When the relay device is in the idle state, in addition to determining the first indication information in the first message, the relay device further needs to determine whether the first message includes third configuration information and/or a relay transmission resource. For example, when the first message does not include the third configuration information, the relay device determines that the network device does not support the first terminal device in communicating with the second terminal device via the relay device. For example, when the first message does not include the relay transmission resource, the relay device determines that the network device does not support the first terminal device in communicating with the second terminal device via the relay device. For example, when the first message does not include the third configuration information and the relay transmission resource, the relay device determines that the network device does not support the first terminal device in communicating with the second terminal device via the relay device. The relay device can determine, based on the message content carried in the first message, whether the network device supports the first terminal device in communicating with the second terminal device via the relay device, so that the communication between the first terminal device and the second terminal device can be implemented via the relay device.

In some embodiments of this application, the first message includes second indication information, where the second indication information indicates that the network device does not support the first terminal device in communicating with the second terminal device via the relay device.

When the network device does not support the first terminal device in communicating with the second terminal device via the relay device, the network device may generate second indication information. When obtaining the second indication information from the first message, the relay device may determine that the network device does not support the first terminal device in communicating with the second terminal device via the relay device. Therefore, the relay device no longer configures a sidelink bearer.

In some embodiments of this application, the first message does not include first indication information, which indicates that the network device does not support the first terminal device in communicating with the second terminal device via the relay device, where
the first indication information indicates that the network device supports the first terminal device in communicating with the second terminal device via the relay device.

The network device may alternatively use an implicit indication manner. When supporting the first terminal device in communicating with the second terminal device via the relay device, the network device may generate first indication information, and include the first indication information in the first message. When the network device does not support the first terminal device in communicating with the second terminal device via the relay device, the network device may not generate first indication information, and the relay device may determine, based on a case in which the first message does not include the first indication information, that the network device does not support the first terminal device in communicating with the second terminal device via the relay device. Therefore, the first terminal device no longer configures a sidelink bearer.

In some embodiments of this application, the communication method performed by the network device further includes:
The network device sends fourth configuration information to the relay device, where the fourth configuration information includes one or more thresholds.

Correspondingly, the relay device receives the fourth configuration information from the network device, and determines, via the fourth configuration information, the one or more thresholds indicated by the network device.

The network device may notify the relay device of the one or more thresholds in an explicit indication manner, so that the relay device can receive the one or more thresholds from the network device.

In this embodiment of this application, the one or more thresholds determined by the network device may be used by the relay device to determine whether to trigger a discovery procedure, where the discovery procedure is used to search for the second terminal device.

Specifically, the one or more thresholds may be used by the relay device to trigger a discovery procedure when signal quality of a link between the first terminal device and the relay device is greater than or equal to the threshold, so that the relay device can support the first terminal device in communicating with the second terminal device.

In some embodiments of this application, the communication method performed by the relay device further includes:
When the first message includes the first indication information, the relay device determines that the network device supports the first terminal device in communicating with the second terminal device via the relay device, where
the first indication information further indicates one or more thresholds.

Correspondingly, in some embodiments of this application, the communication method performed by the network device further includes:
The network device determines that the network device supports the first terminal device in communicating with the second terminal device via the relay device.

The first message includes first indication information, and the first indication information further indicates one or more thresholds.

Specifically, the network device may determine that the first indication information is used for the one or more thresholds, so that the first message may indicate the one or more thresholds. When obtaining the one or more thresholds from the first message, the relay terminal device determines that the network device supports the first terminal device in communicating with the second terminal device via the relay device. The network device may implicitly indicate, depending on whether the threshold is carried, whether the network device supports the first terminal device in communicating with the second terminal device via the relay device. Alternatively, the first terminal device obtains the first indication information from the first message, but the first indication information does not include a threshold configuration. In this case, it is considered by default that there is no threshold constraint when the relay device device performs a relay communication process.

In some embodiments of this application, the one or more thresholds include a third threshold. For example, a first threshold is a threshold 3.

The third threshold is used by the relay device to trigger a discovery procedure when signal quality of a link between the first terminal device and the relay device is greater than or equal to the third threshold, where the discovery procedure is used to search for the second terminal device.

Correspondingly, in some embodiments of this application, the one or more thresholds include the third threshold, and the communication method performed by the relay device further includes:

The relay device triggers a discovery procedure when signal quality of a link between the first terminal device and the relay device is greater than or equal to the third threshold, where the discovery procedure is used to search for the second terminal device.

Example descriptions are provided below. A remote UE sends a discovery message (for example, a discovery solicitation message) to a relay UE, to search for a peer remote UE. After receiving the discovery message from the remote UE, the relay UE measures sidelink signal quality based on the discovery message, to obtain SD-RSRP. When the SD-RSRP is greater than a specific threshold, it indicates that signal quality between the remote UE and the relay UE is good, and the relay UE continues to broadcast the discovery message, used to search for the peer remote UE.

To better understand and implement the foregoing solutions in embodiments of this application, the following provides detailed descriptions by using corresponding application scenarios as examples.

The following describes the technical solutions provided in this application by using two specific embodiments.

### Embodiment 1

In Embodiment 1, a U2U relay communication configuration method is mainly described based on a case in which a base station explicitly indicates a U2U relay capability. The specific solution is shown as follows.

On a base station side, if supporting a U2U relay, the base station includes a U2U capability indication in a system message, to indicate, to a UE served by the base station, that the base station supports the U2U relay. Specifically, the base station carries an L2 U2U relay capability support indication and/or an L3 U2U relay capability support indication. The system message may be carried in a SIB12. The SIB12 is a system message block indicating a sidelink communication-related configuration. A specific indication is as follows:

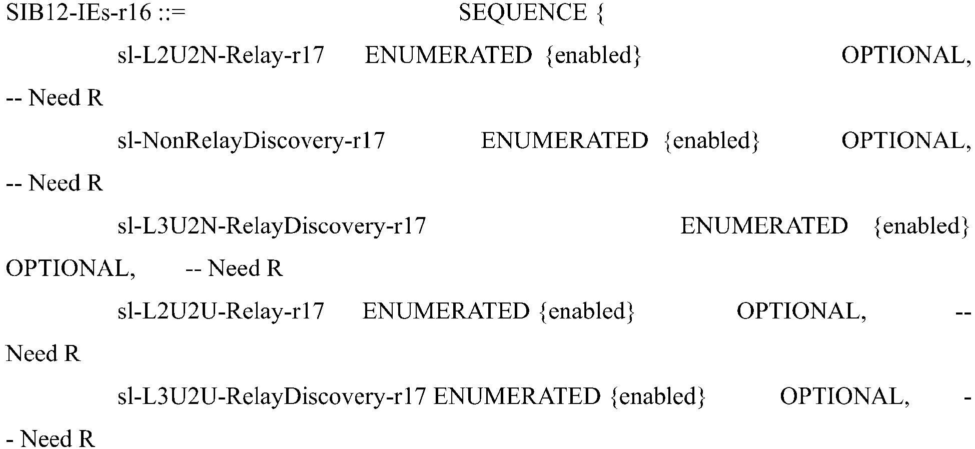

In another possible implementation, a capability indication is not separately introduced for an L3 U2U relay. To be specific, when the base station supports the L3 U2U relay, a SIB12 carries an indication indicating that a value of sl-L3U2U-RelayDiscovery is enable, indicating the base station supports the L3 U2U relay.

When supporting an L2 U2U relay, the base station may further provide U2U relay-related threshold configurations, including a remote UE threshold configuration and a relay UE threshold configuration.

The remote UE threshold configuration is mainly used by a remote UE to determine whether to trigger sending of a discovery message or whether to trigger a discovery procedure, where the discovery procedure is used to search for an appropriate surrounding relay UE, to select and reselect a relay UE. When the remote UE directly communicates with a peer remote UE over a sidelink, and the remote UE detects that signal quality of the sidelink link is less than or equal to a specific threshold, the discovery procedure is triggered to select a relay UE; or when the remote UE communicates with a peer remote UE via a relay UE, and signal quality of a link between the remote UE and the relay UE is less than or equal to a specific threshold, the discovery procedure is triggered to reselect a relay UE. The foregoing thresholds may be a same threshold or different thresholds.

The relay UE threshold configuration is used by the relay UE to determine whether to search for the peer remote UE for the remote UE. In a possible scenario, the remote UE sends the discovery message (for example, a discovery solicitation message) to the relay UE, to search for the peer remote UE. After receiving the discovery message from the remote UE, the relay UE measures sidelink signal quality based on the discovery message, to obtain SD (Sidelink discovery)-RSRP. When the SD-RSRP is greater than or equal to a specific threshold, it indicates that signal quality between the remote UE and the relay UE is good, and the relay UE continues to broadcast the discovery message, used to search for the peer remote UE.

First, the base station may include a U2U relay-related threshold condition configuration in the system message, including a remote UE threshold configuration threshold 1 (a case in which there is one threshold) or a threshold 1 and a threshold 2 (a case in which there are two thresholds), and/or a relay UE threshold configuration threshold 3. The remote UE in an RRC idle state or an RRC inactive state selects or reselects a relay UE based on the threshold condition configuration carried in the system message.

For example, when one threshold is used, when the signal quality of the SL link between the remote UE and the peer remote UE is less than or equal to the threshold 1 (that is, a threshold condition is met), execution of the discovery procedure is triggered, and a relay UE is selected based on a result of the discovery procedure; or when the U2U relay has been established, and the signal quality of the SL link between the remote UE and a current relay UE is less than or equal to the threshold 1 (that is, a threshold condition is met), execution of the discovery procedure is triggered, and a relay UE is reselected.

When two different thresholds are used, when the signal quality of the SL link between the remote UE and the target UE is less than or equal to the threshold 1, execution of the discovery procedure is triggered, and a relay UE is selected based on a result of the discovery procedure; or when the U2U relay has been established, and the signal quality of the SL link between the remote UE and a current relay UE is less than or equal to the threshold 2, execution of the discovery procedure is triggered, and a relay UE is reselected.

When the base station does not provide a threshold configuration in the system message, there is no corresponding constraint by default. To be specific, in any case, the signal quality of the SL link between the remote UE and the peer remote UE or the relay UE meets a threshold condition by default, that is, the discovery procedure may be triggered, to select and reselect a relay UE.

The relay UE in an RRC idle state or an RRC inactive state executes the discovery procedure based on the threshold condition configuration in the system message, and logic thereof is similar to the foregoing logic. The discovery procedure executed by the relay UE includes a model A and a model B.

The remote UE executes the discovery procedure to search for appropriate surrounding candidate relay UEs, and selects and determines a target relay UE from the candidate relay UEs. The remote UE establishes an end-to-end connection to the peer remote UE via the target relay UE, and further needs to perform U2U configuration for communication, including an end-to-end configuration (for example, an SDAP protocol layer configuration or a PDCP protocol layer configuration of a sidelink radio bearer) between the remote UEs, a configuration of a bottom-layer PC5 RLC bearer (where the configuration of the PC5 RLC bearer between the remote UE and the relay UE includes configurations such as an RLC configuration and a MAC configuration) and an adaptation layer configuration (including a mapping relationship between the PC5 RLC bearer and an end-to-end radio bearer).

Based on different RRC states, manners in which the UE obtains a U2U relay configuration are as follows. The following describes a manner of determining the U2U relay configuration on a relay UE side.

### 1. Configuration determining manner of a relay UE in a connected state:

When the relay UE is in the connected state, the relay UE reports QoS information obtained through division, and the base station provides a sidelink bearer configuration for the relay UE based on the reported information. In this case, the base station does not have a dedicated U2U relay configuration. The relay UE needs to report single-hop QoS information between the relay UE (used as a transmit end) and the remote UE (used as a receive end). The QoS information includes a QoS flow ID and a corresponding QoS parameter requirement.

In a possible manner, a QoS flow is a remote UE end-to-end QoS flow, and a QoS parameter is a QoS parameter requirement between the relay UE and the remote UE after the relay UE performs QoS division. For example, an end-to-end delay requirement of a QoS flow 1 is 3 ms. After the QoS division is performed, a QoS requirement of the QoS flow 1 between the relay UE and the remote UE is 1.5 ms.

In addition, the relay UE further reports mapping information. The mapping relationship indicates specific QoS flows that need to be mapped to one bearer, and the bearer is an end-to-end radio bearer or an RLC bearer.

The base station provides a sidelink bearer configuration for the relay UE based on requested QoS flow information and mapping information of QoS flows. For example, a sidelink bearer configuration manner in the R16 protocol may be used. For example, parameter configurations related to an SDAP bearer, a PDCP bearer, and an RLC bearer are included. The SDAP configuration in the sidelink bearer configuration includes a correspondence between a current sidelink bearer and QoS flows, and the plurality of QoS flows may include a plurality of QoS flows on end-to-end radio bearers.

The relay UE determines, based on a sidelink configuration provided by the base station, an RLC bearer configuration between the relay UE and the remote UE and a mapping relationship for an adaptation layer.

In the resource allocation mode 1, to be specific, the base station allocates a sidelink resource to the relay UE, the base station may allocate a U2U relay communication resource to the relay UE. Therefore, the base station further needs to know that the current relay UE is used for U2U relay communication. Optionally, the base station may determine, based on a mapping relationship that is between a QoS flow and a radio bearer and that is reported by the relay UE, that the current configuration is used for the U2U relay.

In another possible implementation, the relay UE reports an L2 ID of the remote UE (the receive end) to request a U2U relay transmission resource, and correspondingly indicates that the U2U relay transmission resource is used for U2U relay communication.

In another possible implementation, the relay UE first determines a mapping relationship between a radio bearer and a QoS flow. For example, after determining an end-to-end SDAP configuration, the remote UE sends the end-to-end SDAP configuration to the relay UE, and determines a QoS requirement that each radio bearer needs to meet. A specific radio bearer may include a plurality of QoS flows with different QoS parameter requirements. An overall QoS parameter requirement of the radio bearer may be determined in the following manners, to ensure, as much as possible, that the configuration between the relay UE and the remote UE can meet the QoS requirement of the end-to-end radio bearer.

For example, the QoS parameter requirement of the current radio bearer may be determined in at least one implementation of the following five manners:
(1) Determine that a QoS parameter corresponding to a QoS flow with a highest priority is the QoS parameter requirement of the current radio bearer.
(2) Determine that a QoS parameter requirement corresponding to a QoS flow with a minimum packet delay budget (Packet Delay Budget, PDB) is the parameter requirement of the current radio bearer.
(3) Determine that a QoS parameter corresponding to a QoS flow with a highest guaranteed flow bit rate (Guaranteed Flow Bit Rate, GFBR) requirement is the parameter requirement of the current radio bearer.
(4) Determine that a QoS parameter corresponding to a QoS flow with a lowest packet error rate (Packet Error Rate, PER) requirement is the parameter requirement of the current radio bearer.
(5) Determine that in a plurality of sets of QoS parameter information corresponding to a plurality of QoS flows, a highest QoS parameter is selected for each item of requirements as the parameter requirement of the current radio bearer.

Based on the foregoing procedure, it is equivalent to that the relay UE uses the radio bearer as a whole, that is, it is equivalent to that the plurality of QoS flows are combined as one integrated "QoS flow", and are reported as the integrated "QoS flow". When the relay UE performs reporting, a temporary QoS flow ID may be further allocated, for example, may be an ID of a specific QoS flow. The base station provides a sidelink bearer configuration for the relay UE based on the reported "QoS flow information", including a mapping relationship between a "QoS flow ID" (which essentially corresponds to a QoS flow on a radio bearer) and the sidelink bearer configuration.

The relay UE determines, based on a sidelink configuration provided by the base station, an RLC bearer configuration between the relay UE and the remote UE, where the RLC bearer is used for transmission of a radio bearer associated with a corresponding "QoS flow ID". In this implementation scenario, behavior of the base station is consistent with a mechanism in R16 sidelink. Therefore, if the base station is needed to allocate a sidelink transmission resource of the U2U relay, the relay UE needs to report a U2U relay-related indication.

In another possible implementation, the base station may provide a U2U relay dedicated configuration for the relay UE. In this implementation scenario, the base station provides, for the relay UE based on QoS information (including a QoS flow ID, a QoS parameter requirement of a QoS flow, and a mapping relationship between the QoS flow and a radio bearer) reported by the relay UE, an RLC bearer configuration between the relay UE and the remote UE and a mapping relationship configuration for an adaptation layer, where the mapping relationship configuration for the adaptation layer includes a mapping relationship between an end-to-end radio bearer and an RLC bearer.

### 2. Configuration determining manner of a relay UE in an idle or inactive (idle or inactive) state:

When the relay UE is RRC idle or inactive, the relay UE may obtain, from a SIB message of the base station, indication information indicating that the base station supports the U2U relay. In addition, the relay UE may further obtain sidelink configuration information from the SIB message, where the sidelink configuration information includes configuration information of the sidelink radio bearer. A sidelink radio bearer configuration includes an SDAP configuration, a PDCP configuration, and an RLC bearer configuration, where the SDAP configuration includes a mapping relationship between a QoS flow and a radio bearer. The relay UE determines a bearer configuration 1 between the relay UE and the remote UE (the peer remote UE) from the sidelink configuration information in the SIB message based on a result obtained through QoS division and a determined mapping relationship between an end-to-end radio bearer and a QoS flow (after determining the mapping relationship between the end-to-end radio bearer and the QoS, a remote UE side sends the mapping relationship to a relay UE side). The bearer configuration 1 includes a configuration of one or more radio bearers, and includes a correspondence between a QoS flow and a radio bearer or an RLC bearer, and a configuration of a PC5 RLC bearer. The relay UE finally determines, based on the determined correspondence between the QoS flow and the RLC bearer and the correspondence between the end-to-end radio bearer and the QoS, a mapping relationship for an adaptation layer, namely, a correspondence between the end-to-end radio bearer and the PC5 RLC bearer between the relay UE and the peer remote UE.

In a possible implementation, although the base station indicates a capability of supporting the U2U relay, the base station cannot provide the sidelink configuration information. In an implementable scenario, because the system message does not carry the sidelink configuration information, the relay UE considers, by default, that the base station cannot support the U2U relay. In another possible manner, the relay UE enters a connected state, and requests a corresponding configuration from the base station in the connected state.

### 3. Configuration determining manner of a relay UE being OoC:

When being in an OoC state, the relay UE is not connected to the base station, and the relay UE may obtain a sidelink configuration from pre-configuration information, and determine a configuration of a PC5 RLC bearer based on a result obtained through QoS division.

The following describes a manner of determining the U2U relay configuration on the remote UE side.

First, the remote UE determines, based on a U2U relay capability indication indicated by the base station, that the base station supports the U2U relay.

### 1. Configuration determining manner of a remote UE in a connected state:

The remote UE side receives a result obtained by performing QoS division by the relay UE.

In a possible implementation, in the connected state, the remote UE reports end-to-end or single-hop QoS information, to request the base station to perform configuration. Specifically, the remote UE first reports, to the base station, the end-to-end QoS information and the QoS information obtained through division between the remote UE (a transmit end) and the relay UE (a receive end), namely, two sets of QoS information, respectively including QoS flow ID information and a corresponding QoS parameter requirement that correspond to one or more QoS flows.

In addition, when the end-to-end QoS information is reported, information about an identity, for example, an L2 ID, of the peer remote UE, is further reported. When the QoS information between the remote UE and the relay UE is reported, information about an identity of the relay UE, for example, a relay UE L2 ID, is further reported.

The following is a specific example:
End-to-end QoS information: peer remote UE L2 ID, {QoS flow ID 1, QoS parameter requirement 1}, {QoS flow ID 2, QoS parameter requirement 2}, and {QoS flow ID 3, QoS parameter requirement 3}.

QoS information obtained through division: relay UE L2 ID, {QoS flow ID 1, QoS parameter requirement 4}, {QoS flow ID 2, QoS parameter requirement 5}, and {QoS flow ID 3, QoS parameter requirement 6}.

To enable the base station to know that there is an association between the two groups of QoS, to be specific, the QoS obtained through division is a part of the end-to-end QoS, or the remote UE performs communication via the indicated relay UE L2 ID and peer remote UE L2 ID, the remote UE further needs to report, to the base station, that there is an association relationship between the relay UE L2 ID and the peer remote UE L2 ID.

In a possible implementation, the base station provides sidelink bearer configurations for the remote UE based on two sets of configurations. A sidelink bearer configuration 1 corresponds to the end-to-end QoS information, and includes a correspondence between an end-to-end QoS flow and a sidelink radio bearer. A sidelink bearer configuration 2 corresponds to the QoS information obtained through division between the remote UE and the relay UE, and includes a correspondence between a QoS flow between the remote UE and the relay UE and a sidelink radio bearer. In addition, a QoS flow that is configured on one sidelink radio bearer in the sidelink bearer configuration 1 also needs to be configured on one sidelink radio bearer in the sidelink bearer configuration 2.

In another possible implementation, the base station provides end-to-end SDAP and PDCP configurations for the remote UE based on a relationship between the remote UE and the relay UE and the end-to-end QoS information. Based on the QoS information obtained through division between the remote UE and the relay UE, a U2U relay dedicated configuration is provided, and includes a mapping relationship between a radio bearer and a PC5 RLC bearer, and configuration information of the PC5 RLC bearer.

In another possible implementation, the base station does not need to sense a relationship between the remote UE, the relay UE, and the peer remote UE, and the base station provides sidelink bearer configurations only based on the QoS flow information.

Specifically, the remote UE first reports the end-to-end QoS information, including the QoS flow ID information and the QoS parameter information that correspond to the one or more QoS flows, and may further report the information about the identity of the peer remote UE. The base station determines the sidelink bearer configurations for the remote UE based on the reported information, and the remote UE determines the end-to-end PDCP and SDAP configurations based on the sidelink bearer configurations. The SDAP configuration includes the mapping relationship between the QoS flow and the end-to-end radio bearer. The remote UE further reports, based on the mapping relationship, the QoS information obtained through division, but performs reporting by using each radio bearer as a "QoS flow". Specifically, the remote UE determines, based on QoS information on the radio bearer, a QoS requirement of a single radio bearer and a QoS flow ID. A determining manner is the same as that on a relay UE side. The remote UE reports determined "QoS flow" information. The base station provides a sidelink bearer configuration for the remote UE based on the reported information. The remote UE determines a PC5 RLC bearer configuration and a mapping relationship for an adaptation layer based on the bearer configuration.

In the foregoing implementation, the base station does not sense that the remote UE performs U2U relay. Therefore, if the remote UE operates in a mode 1 and the base station is needed to allocate a U2U relay transmission resource, the remote UE needs to perform indication to the base station. Specifically, this may be similar to the solution for the relay UE in which when the U2U relay transmission resource is requested, the information about the identity of the relay UE is reported, and it is indicated that the U2U relay transmission resource is used for the U2U relay.

### 2. Configuration determining manner of a remote UE being idle or inactive:

The remote UE determines an end-to-end SDAP configuration and PDCP configuration, and a configuration of a PC5 RLC bearer based on a sidelink configuration in a system message of the base station.

Specifically, the remote UE determines the SDAP configuration and the PDCP configuration based on an end-to-end QoS parameter requirement and a system message configuration; and then further determines the configuration of the PC5 RLC bearer based on a determined mapping relationship between a QoS flow and a radio bearer.

In a possible implementation, the base station indicates that the U2U relay is supported, but does not provide a sidelink configuration. In this case, the remote UE may consider by default that the base station cannot support the U2U relay; or the remote UE enters a connected state, and requests, in the connected state, a configuration from the base station. Alternatively, the sidelink configuration is determined based on a pre-configuration.

In another possible manner, the remote UE or the relay UE is in a connected state, an idle state, or an inactive state, but the current base station does not support a U2U relay capability. In this case, the remote UE or the relay UE cannot perform a U2U relay-related procedure, including performing a U2U relay UE discovery procedure, selecting and reselecting a relay UE, configuring a U2U relay bearer, and the like.

### 3. Configuration determining manner of a remote UE being OoC:

The remote UE performs U2U relay configuration based on a pre-configuration.

It may be understood that a manner in which the UE in different states obtains a configuration may be a combination of the foregoing manners. For example, the base station provides a U2U relay dedicated configuration for the UE via dedicated signaling, and provides a sidelink bearer configuration for the UE via a system message; or regardless of whether the UE is in a connected state or a non-connected state, the base station can provide only a sidelink bearer configuration.

In another possible implementation, the base station further needs to provide a U2U relay dedicated resource pool for the UE. For the UE in an idle or inactive state, if the base station does not provide the U2U relay dedicated resource pool, it is considered by default that the UE does not perform U2U relay under the base station; or the UE in an idle or inactive state enters a connected state to request a resource request from the base station, to request the base station to allocate the U2U relay resource pool. For the UE in a connected state, the UE may request, based on the base station supporting the U2U relay, the base station to configure a U2U relay transmission resource.

Different from the conventional technology, in this embodiment, the base station indicates a U2U relay support status in the system message, and provides a threshold configuration for a U2U relay procedure. In some implementation solutions of Embodiment 1, when learning of a connection relationship between the remote UE and the relay UE, the base station needs to provide end-to-end and single-hop configurations for the remote UE, to avoid a case in which different QoS flows cannot be configured on one bearer. In some other implementation solutions, the remote UE considers data on a same radio bearer as one QoS flow, and reports the QoS flow, to ensure that these QoS flows are always configured on one radio bearer. In the latter solution, when the base station is needed to provide a U2U relay transmission resource, the UE further needs to indicate a U2U relay indication to the base station.

It can be learned from the foregoing example descriptions that Embodiment 1 provides a process in which the remote UE and the relay UE implement the U2U relay configuration when the base station supports the U2U relay and participation of the base station is reduced, and a QoS requirement of service data can be met.

### Embodiment 2

In Embodiment 2, a difference between Embodiment 2 and Embodiment 1 is first described as follows: A base station does not carry an explicit U2U relay capability indication, but indicates, via a threshold configuration, whether the base station supports a U2U relay. Specifically, if the base station configures a remote UE threshold configuration or a relay UE threshold configuration, a remote UE or a relay UE determines that the base station supports the U2U relay. The remote UE and relay UE threshold configurations are the same as those in Embodiment 1. To be specific, there may be one or more remote UEs, to select and reselect a remote UE. A threshold of the relay UE is used to determine whether to execute a discovery procedure for the remote UE to search for a target remote UE.

In a possible case, a system may configure a threshold for the remote UE and the relay UE via a system message or a dedicated configuration, and the threshold is included in an information element IE-thres, that is:

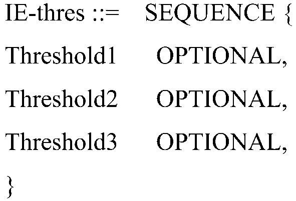

OPTIONAL indicates that a threshold configuration is an optional configuration. When the base station supports a U2U relay capability, the base station may include the information element threshold (IE-thres) in the system message. IE-thres may carry one or more of a threshold 1 to a threshold 3, or may not carry a threshold. If the threshold is not carried, it indicates that there is no constraint on the threshold. If the base station does not support a U2U relay capability, the base station does not include IE-thres in the system message. If the system message that is sent by the base station and that is received by the UE does not carry IE-thres, it is determined that the base station does not support the U2U relay.

When the UE determines that the base station supports or does not support the U2U relay, a configuration procedure of the remote UE or the relay UE is the same as that in Embodiment 1.

In another possible implementation, the base station indicates, via a system message such as a SIB12, whether a threshold can be configured. For example, the system message includes indication information indicating whether the U2U relay is supported. If the indication information is included, that is, the threshold threshold can be configured, it indicates that the U2U relay is supported; if the indication information and the remote UE/relay UE threshold configuration are included, the remote UE and the relay UE perform a U2U relay-related procedure based on a current threshold; if the indication information is included, but the remote UE/relay UE threshold configuration is not included, the remote UE and the relay UE consider that there is no threshold constraint; or if the indication information is not included, the base station does not support a configuration of the U2U relay.

In another possible implementation, if a system message includes indication information but does not include the remote UE/relay UE threshold configuration, but the remote UE/relay UE needs to perform U2U relay and expects the base station to configure a threshold, the remote UE/relay UE may enter a connected state, and request the base station to configure a related threshold parameter.

Different from the conventional technology, in this embodiment, the base station has no explicit capability indication, but notifies, to the UE in an implicit indication manner, whether the U2U relay capability can be supported.

It can be learned from the foregoing example descriptions that, in Embodiment 2, an implicit indication indicates whether the base station supports the U2U relay capability, for example, indicates whether a threshold can be configured for an IE or indicates whether the base station supports the U2U relay capability, so that the remote UE or the relay UE establishes and configures the U2U relay based on a support status of the base station.

It can be learned from the foregoing example descriptions that this embodiment of this application describes the interaction between the base station and the UE and a method for configuring the UE in the U2U relay when the participation of the base station is reduced. Specifically, the base station indicates, in the system message, that the U2U relay is supported (the explicit indication or the implicit indication of the threshold configuration). The UE executes the discovery procedure based on the indication of the base station and the threshold configuration of the base station, and establishes a U2U relay connection. The QoS information reported by the UE in the connected state is used by the base station to provide the sidelink bearer configuration or the U2U relay dedicated configuration. In addition, the UE may further report a U2U relay indication, to request the base station to allocate a mode 1 resource. The UE being idle or inactive determines the U2U relay configuration based on the sidelink bearer configuration in the system message of the base station.

FIG. 11 is a schematic flowchart of a terminal device according to an embodiment of this application. The terminal device is specifically a first terminal device, and the first terminal device includes:
a receiving module 1101, configured to receive a first message from a network device, where the first message indicates a relay support capability of the network device; and
a processing module 1102, configured to determine first configuration information of the first terminal device based on the first message, where the first configuration information is used by the first terminal device to communicate with a second terminal device via a relay device.

FIG. 12 is a schematic flowchart of a network device according to an embodiment of this application. The network device includes:
a processing module 1201, configured to generate a first message based on a relay support capability of the network device; and
a sending module 1202, configured to send the first message to a first terminal device, where the first message indicates the relay support capability of the network device.

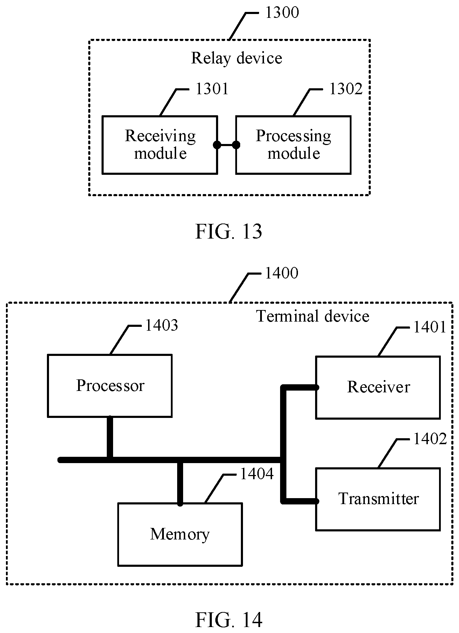

FIG. 13 is a schematic flowchart of a relay device according to an embodiment of this application. The relay device includes:
a receiving module 1301, configured to receive a first message from a network device, where the first message indicates a relay support capability of the network device; and
a processing module 1302, configured to determine first configuration information of the relay device based on the first message, where the first configuration information is used by a first terminal device to communicate with a second terminal device via the relay device.

An embodiment of this application further provides a network device. A structure is similar to that in FIG. 12. The network device includes:
a processing module, configured to generate a first message based on a relay support capability of the network device; and
a sending module, configured to send the first message to a relay device, where the first message indicates the relay support capability of the network device.

It should be noted that, for brief description, the foregoing method embodiments are represented as a series of actions. However, a person skilled in the art should appreciate that this application is not limited to the described sequence of the actions, because according to this application, some steps may be performed in other sequences or simultaneously. It should be further appreciated by a person skilled in the art that embodiments described in this specification all belong to example embodiments, and the involved actions and modules are not necessarily required by this application.

It should be noted that, because content such as information exchange between the modules/units in the apparatus and the execution processes thereof is based on a same concept as the method embodiments of this application, technical effects of the content are the same as those of the method embodiments of this application. For specific content, refer to the descriptions in the foregoing method embodiments of this application. Details are not described herein again.

An embodiment of this application further provides a computer storage medium. The computer storage medium stores a program. The program is executed to perform some or all of the steps recorded in the method embodiments.

The following describes another terminal device provided in an embodiment of this application. Refer to FIG. 14. The terminal device 1400 includes:
a receiver 1401, a transmitter 1402, a processor 1403, and a memory 1404 (there may be one or more processors 1403 in the terminal device 1400, and one processor is used as an example in FIG. 14). In some embodiments of this application, the receiver 1401, the transmitter 1402, the processor 1403, and the memory 1404 may be connected through a bus or in another manner. In FIG. 14, a connection through the bus is used as an example.

The memory 1404 may include a read-only memory and a random access memory, and provide instructions and data for the processor 1403. A part of the memory 1404 may further include a non-volatile random access memory (non-volatile random access memory, NVRAM). The memory 1404 stores an operating system and operation instructions, an executable module or a data structure, a subset thereof, or an extended set thereof. The operation instructions may include various operation instructions to implement various operations. The operating system may include various system programs, to implement various basic services and process a hardware-based task.

The processor 1403 controls an operation of the terminal device, and the processor 1403 may be further referred to as a central processing unit (central processing unit, CPU). In specific application, components of the terminal device are coupled together via a bus system. In addition to a data bus, the bus system may further include a power bus, a control bus, a status signal bus, and the like. However, for clear description, various types of buses in the figure are referred to the bus system.

The methods disclosed in the foregoing embodiments of this application may be applied to the processor 1403 or may be implemented by the processor 1403. The processor 1403 may be an integrated circuit chip and has a signal processing capability. In an implementation process, the steps in the foregoing methods can be completed by using a hardware integrated logic circuit in the processor 1403, or by using instructions in a form of software. The processor 1403 may be a general-purpose processor, a digital signal processor (digital signal processing, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by using a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1404, and the processor 1403 reads information in the memory 1404 and completes the steps in the foregoing methods in combination with hardware of the processor 1403.

The receiver 1401 may be configured to: receive input digit or character information, and generate signal input related to a related setting and function control of the terminal device. The transmitter 1402 may include a display device such as a display screen, and the transmitter 1402 may be configured to output digit or character information through an external interface.

In this embodiment of this application, the processor 1403 is configured to perform the communication method of the first terminal device.

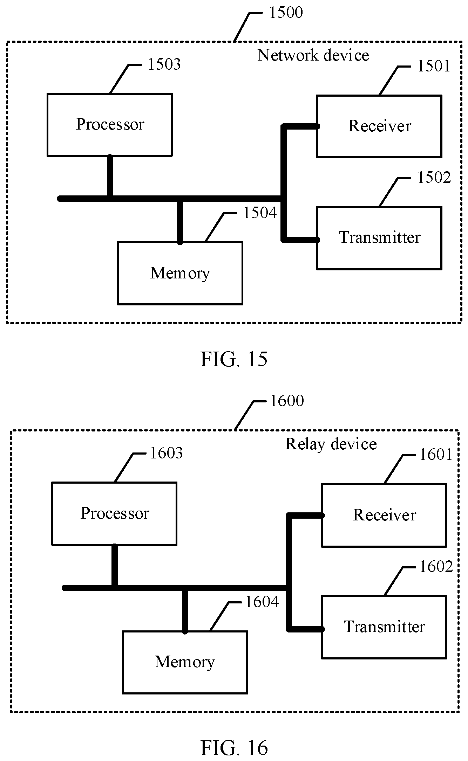

The following describes another network device provided in an embodiment of this application. Refer to FIG. 15. The network device 1500 includes:
a receiver 1501, a transmitter 1502, a processor 1503, and a memory 1504 (there may be one or more processors 1503 in the network device 1500, and one processor is used as an example in FIG. 15). In some embodiments of this application, the receiver 1501, the transmitter 1502, the processor 1503, and the memory 1504 may be connected through a bus or in another manner. In FIG. 15, a connection through the bus is used as an example.

The memory 1504 may include a read-only memory and a random access memory, and provide instructions and data to the processor 1503. A part of the memory 1504 may further include an NVRAM. The memory 1504 stores an operating system and operation instructions, an executable module or a data structure, a subset thereof, or an extended set thereof. The operation instructions may include various operation instructions to implement various operations. The operating system may include various system programs, to implement various basic services and process a hardware-based task.

The processor 1503 controls an operation of the network device, and the processor 1503 may also be referred to as a CPU. In specific application, components of the network device are coupled together via a bus system. In addition to a data bus, the bus system may further include a power bus, a control bus, a status signal bus, and the like. However, for clear description, various types of buses in the figure are referred to the bus system.

The method disclosed in the foregoing embodiments of this application may be applied to the processor 1503, or may be implemented by the processor 1503. The processor 1503 may be an integrated circuit chip, and has a signal processing capability. In an implementation process, the steps in the foregoing methods can be completed by using a hardware integrated logic circuit in the processor 1503, or by using instructions in a form of software. The foregoing processor 1503 may be a general-purpose processor, a DSP, an ASIC, an FPGA or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by using a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1504, and the processor 1503 reads information in the memory 1504 and completes the steps in the foregoing methods in combination with hardware in the processor 1503.

In this embodiment of this application, the processor 1503 is configured to perform the communication method of the foregoing network device.

The following describes another relay device provided in an embodiment of this application. Refer to FIG. 16. The relay device 1600 includes:
a receiver 1601, a transmitter 1602, a processor 1603, and a memory 1604 (there may be one or more processors 1603 in the relay device 1600, and one processor is used as an example in FIG. 16). In some embodiments of this application, the receiver 1601, the transmitter 1602, the processor 1603, and the memory 1604 may be connected through a bus or in another manner. In FIG. 16, a connection through the bus is used as an example.

The memory 1604 may include a read-only memory and a random access memory, and provide instructions and data to the processor 1603. A part of the memory 1604 may further include an NVRAM. The memory 1604 stores an operating system and operation instructions, an executable module or a data structure, a subset thereof, or an extended set thereof. The operation instruction may include various operation instructions to implement various operations. The operating system may include various system programs, to implement various basic services and process a hardware-based task.

The processor 1603 controls an operation of the relay device, and the processor 1603 may also be referred to as a CPU. In specific application, components of the relay device are coupled together via a bus system. In addition to a data bus, the bus system may further include a power bus, a control bus, a status signal bus, and the like. However, for clear description, various types of buses in the figure are referred to the bus system.

The methods disclosed in the foregoing embodiments of this application may be applied to the processor 1603, or may be implemented by the processor 1603. The processor 1603 may be an integrated circuit chip and has a signal processing capability. In an implementation process, the steps in the foregoing method can be completed by using a hardware integrated logic circuit in the processor 1603, or by using instructions in a form of software. The foregoing processor 1603 may be a general-purpose processor, a DSP, an ASIC, an FPGA or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by using a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1604, and the processor 1603 reads information in the memory 1604 and completes the steps in the foregoing methods in combination with hardware of the processor.

In this embodiment of this application, the processor 1603 is configured to perform the communication method of the foregoing relay device.

In another possible design, a chip in a terminal includes a processing unit and a communication unit. The processing unit may be, for example, a processor, and the communication unit may be, for example, an input/output interface, a pin, or a circuit. The processing unit may execute computer-executable instructions stored in a storage unit, to cause the chip in the terminal to perform the method according to any one of the foregoing communication methods. Optionally, the storage unit is a storage unit in the chip, for example, a register or a cache. Alternatively, the storage unit may be a storage unit in the terminal but outside the chip, for example, a read-only memory (read-only memory, ROM), another type of static storage device that can store static information and instructions, or a random access memory (random access memory, RAM).

The processor mentioned anywhere above may be a general-purpose central processing unit, a microprocessor, an ASIC, or one or more integrated circuits configured to control program execution of the method according to the first aspect.

In addition, it should be noted that the described apparatus embodiment is merely an example. The units described as separate components may or may not be physically separate, and components displayed as units may or may not be physical units, may be located in one position, or may be distributed on a plurality of network units. Some or all the modules may be selected according to actual requirements to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by using software in addition to necessary general-purpose hardware, or certainly, may be implemented by using dedicated hardware, including a dedicated integrated circuit, a dedicated CPU, a dedicated memory, a dedicated component, and the like. Usually, any function completed by a computer program can be easily implemented by using corresponding hardware. Moreover, a specific hardware structure used to implement a same function may be in various forms, for example, in a form of an analog circuit, a digital circuit, or a dedicated circuit. However, as for this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a server, a network device, or the like) to perform the methods described in embodiments of this application.

All or a part of the foregoing embodiments may be implemented by using software, hardware, firmware, or any combination thereof. When software is used to implement embodiments, all or a part of embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

## Claims

1. A communication method, wherein the method comprises:
receiving a first message from a network device, wherein the first message indicates a relay support capability of the network device; and
determining first configuration information of a first terminal device based on the first message, wherein the first configuration information is used by the first terminal device to communicate with a second terminal device via a relay device.

2. The method according to claim 1, wherein the first message comprises first indication information, wherein the first indication information indicates that the network device supports the first terminal device in communicating with the second terminal device via the relay device.

3. The method according to claim 1 or 2, wherein the method further comprises:
determining first quality of service QoS flow information between the first terminal device and the relay device; and
sending a second message to the network device, wherein the second message comprises the first QoS flow information, the first QoS flow information comprises an identity of one or more first QoS flows and a first QoS parameter requirement of the one or more first QoS flows, and the first QoS parameter requirement is a QoS parameter requirement of the first QoS flow between the first terminal device and the relay device, wherein
the first QoS flow comprises a QoS flow between the first terminal device and the second terminal device.

4. The method according to claim 3, wherein the second message further comprises an identity of the relay device and/or an identity of the second terminal device.

5. The method according to any one of claims 1 to 4, wherein the method further comprises:
sending a third message to the network device, wherein the third message comprises the third QoS flow information, the third QoS flow information comprises an identity of one or more first QoS flows and a fourth QoS parameter requirement of the one or more first QoS flows, and the fourth QoS parameter requirement is a QoS parameter requirement of the first QoS flow between the first terminal device and the second terminal device, wherein
the first QoS flow comprises a QoS flow between the first terminal device and the second terminal device.

6. The method according to any one of claims 1 to 5, wherein the determining the first configuration information of the first terminal device based on the first message comprises:
determining, based on the first message, that the network device supports the first terminal device in communicating with the second terminal device via the relay device;
receiving the first configuration information from the network device; and
determining a configuration of a first bearer between the first terminal device and the relay device based on the first configuration information.

7. The method according to any one of claims 1 to 6, wherein the first configuration information comprises the configuration of the first bearer and a mapping relationship between a second bearer and the first bearer, wherein
the first bearer comprises a bearer between the first terminal device and the relay device; and
the second bearer comprises a bearer between the first terminal device and the second terminal device.

8. The method according to any one of claims 1 to 6, wherein the first configuration information further comprises the configuration of the first bearer and a correspondence between the first QoS flow and the first bearer, wherein
the first QoS flow comprises a QoS flow between the first terminal device and the second terminal device.

9. The method according to claim 8, wherein the method further comprises:
receiving second configuration information from the network device, wherein the second configuration information comprises a configuration of a second bearer and a correspondence between the first QoS flow and the second bearer, wherein the second bearer comprises a bearer between the first terminal device and the second terminal device; and
determining a correspondence between the first bearer and the second bearer based on the first configuration information and the second configuration information.

10. The method according to claim 1 or 2, wherein the method further comprises:
determining an identity of a second QoS flow between the first terminal device and the relay device and a second QoS parameter requirement corresponding to the second QoS flow, wherein the second QoS flow corresponds to one or more first QoS flows, and the first QoS flow comprises a QoS flow between the first terminal device and the second terminal device; and
sending second QoS flow information to the network device, wherein the second QoS flow information comprises the identity of the second QoS flow and the second QoS parameter requirement corresponding to the second QoS flow.

11. The method according to claim 10, wherein the determining the second QoS parameter requirement corresponding to the second QoS flow comprises:
determining, based on a first QoS parameter requirement of the one or more first QoS flows, the second QoS parameter requirement corresponding to the second QoS flow, wherein
the first QoS parameter requirement is a QoS parameter requirement of the first QoS flow between the first terminal device and the relay device; and
the second QoS parameter requirement is a QoS parameter requirement of the second QoS flow between the first terminal device and the relay device.

12. The method according to claim 10 or 11, wherein the second QoS flow corresponds to one or more second bearers, and the second bearer comprises a bearer between the first terminal device and the second terminal device.

13. The method according to any one of claims 10 to 12, wherein the first configuration information further comprises a configuration of a first bearer and a correspondence between the second QoS flow and the first bearer, and the first bearer comprises a bearer between the first terminal device and the relay device.

14. The method according to claim 13, wherein the method further comprises:
receiving second configuration information from the network device, wherein the second configuration information comprises a configuration of the second bearer and a correspondence between the first QoS flow and the second bearer, wherein the second bearer comprises a bearer between the first terminal device and the second terminal device; and
determining a correspondence between the first bearer and the second bearer based on the first configuration information and the second configuration information.

15. The method according to any one of claims 1 to 14, wherein the method further comprises:
sending a first request to the network device, wherein the first request is used to request the network device to allocate a relay transmission resource.

16. The method according to claim 1 or 2, wherein the determining the first configuration information of the first terminal device based on the first message comprises:
determining, based on the first message, that the network device supports the first terminal device in communicating with the second terminal device via the relay device;
obtaining third configuration information from the first message, wherein the third configuration information is used for communication between terminal devices; and
determining the first configuration information based on the third configuration information.

17. The method according to claim 16, wherein the determining the first configuration information based on the third configuration information comprises:
determining second configuration information from the third configuration information based on a third QoS parameter requirement of a first QoS flow, wherein the third QoS parameter requirement is an end-to-end QoS parameter requirement of the first QoS flow, the second configuration information comprises a mapping relationship between the first QoS flow and a second bearer, the second bearer comprises a bearer between the first terminal device and the second terminal device, and the first QoS flow comprises a QoS flow between the first terminal device and the second terminal device.

18. The method according to claim 17, wherein the determining the first configuration information based on the third configuration information further comprises:
determining the first configuration information based on the third configuration information and the mapping relationship between the first QoS flow and the second bearer, wherein the first configuration information comprises a configuration of a first bearer between the first terminal device and the relay device and/or a mapping relationship between the first bearer and the second bearer.

19. The method according to claim 2, wherein the method further comprises:
when the first message comprises the first indication information, and the first message does not comprise third configuration information and/or a relay transmission resource, determining that the network device does not support the first terminal device in communicating with the second terminal device via the relay device, wherein the third configuration information is used for communication between terminal devices;
or
when the first message comprises the first indication information, and the first message does not comprise third configuration information and/or a relay transmission resource, sending a second request to the network device, wherein the second request is used to request the network device to send the third configuration information and/or the relay transmission resource.

20. The method according to claim 1, wherein the first message comprises second indication information, wherein the second indication information indicates that the network device does not support the first terminal device in communicating with the second terminal device via the relay device.

21. The method according to claim 1, wherein the first message does not comprise first indication information, which indicates that the network device does not support the first terminal device in communicating with the second terminal device via the relay device, wherein
the first indication information indicates that the network device supports the first terminal device in communicating with the second terminal device via the relay device.

22. The method according to claim 2, wherein the method further comprises:
when the first message comprises the first indication information, determining that the network device supports the first terminal device in communicating with the second terminal device via the relay device, wherein
the first indication information further indicates one or more thresholds.

23. The method according to claim 22, wherein the one or more thresholds comprise a first threshold, and the method further comprises:
when signal quality of a link between the first terminal device and the second terminal device is less than or equal to the first threshold, triggering selection of a relay device, triggering reselection of a relay device, or executing a discovery procedure.

24. The method according to claim 22, wherein the one or more thresholds comprise a first threshold and a second threshold, and the method further comprises:
when signal quality of a link between the first terminal device and the second terminal device is less than or equal to the first threshold, triggering selection of a relay device or executing a discovery procedure;
or
when signal quality of a link between the first terminal device and the relay device is less than or equal to the second threshold, triggering reselection of a relay device or executing a discovery procedure.

25. A terminal device, wherein the terminal device is specifically a first terminal device, and the first terminal device comprises:
a receiving module, configured to receive a first message from a network device, wherein the first message indicates a relay support capability of the network device; and
a processing module, configured to determine first configuration information of the first terminal device based on the first message, wherein the first configuration information is used by the first terminal device to communicate with a second terminal device via a relay device.

26. A terminal device, wherein the terminal device is specifically a first terminal device, and the first terminal device comprises a processor and a memory, wherein the processor and the memory communicate with each other;
the memory is configured to store instructions; and
the processor is configured to execute the instructions in the memory, to perform the method according to any one of claims 1 to 24.

27. A computer-readable storage medium, comprising instructions, wherein when the instructions are run on a computer, the computer is caused to perform the method according to any one of claims 1 to 24.

28. A computer program product comprising instructions, wherein when the computer program product runs on a computer, the computer is caused to perform the method according to any one of claims 1 to 24.
